(19) **Europäisches Patentamt**
**European Patent Office**
**Office européen des brevets**

(11) **EP 1 941 698 B1**

(12) **EUROPEAN PATENT SPECIFICATION**

(45) Date of publication and mention
of the grant of the patent:
**05.10.2011 Bulletin 2011/40**

(21) Application number: **06804790.1**

(22) Date of filing: **05.10.2006**

(51) Int Cl.:
***H04L 29/06*** *(2006.01)*

(86) International application number:
**PCT/CH2006/000544**

(87) International publication number:
**WO 2007/038896 (12.04.2007 Gazette 2007/15)**

(54) **Method and devices for user authentication**

Verfahren und Einrichtungen zur Benutzerauthentifikation

Procédé et dispositifs pour l'authentification d'utilisateur

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **05.10.2005 US 723469 P
08.12.2005 EP 05405693
21.12.2005 EP 05405716**

(43) Date of publication of application:
**09.07.2008 Bulletin 2008/28**

(73) Proprietor: **Privasphere AG
8032 Zürich (CH)**

(72) Inventor: **HAUSER, Ralf
CH-8702 Zollikon (CH)**

(56) References cited:
**FR-A1- 2 771 533      US-A- 4 697 072
US-A- 5 177 789      US-A1- 2002 107 798**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of the Invention

The present invention relates to a method and to devices for authenticating a user accessing a server. Specifically, the present invention relates to a method, a computer program product, and a computerized server for authenticating a user using a communication terminal to access the server via a telecommunications network.

Background of the Invention

The sophistication of attacks against login mechanisms over the Internet is rapidly growing. Institutions such as banks are rolling out two-factor authentication devices, some even including challenge-response mechanisms, at a high pace and even higher cost. Man-in-the-middle (MITM) attacks pose a serious threat to all SSL/TLS-based online applications, such as Internet banking. The common answer to this is to use the client-certificate based mutual authentication as required by the original Secure Sockets Layer (SSL) protocol (US 5,657,390) or Transport Layer Security (TLS) protocol standards (Dierks, T., and C. Allen, "The TLS Protocol Version 1.0," Request for Comments 2246, January 1999). However, beyond tightly controlled areas of corporate influence, this approach has not found the widespread acceptance its designers anticipated.

US 4,405,829, US 4,720,860, US 4,885,778, and US 4,856,062 relate to an authentication token device that is commonly known as SecurID token. This token device provides strong user authentication, however, it does not protect against MITM attacks that operate in real-time:

Described in the patent application US 2004/0064687 is a method for preventing MITM attacks by means of an online third-party, i.e. an "Identity Provider". The method described does not require changes to the SSL/TLS protocols nor does it require a full public key infrastructure (PKI) to be rolled out. However, it requires the client to be changed and to contain a hard-coded certificate of the identity provider.

US 2002/107798 A1 describes a method for authenticating a smart card to a security device. The method described is based on the assumption that the chip card is in possession of the public key of the security device, prior to the start of the protocol, and that the (client) application is limited to using only this public key. However, these assumptions cannot be made generally.

US 4,697,072 describes a method for authenticating a card and its card holder in the context of a one-time purchasing transaction at a point of sale, an ATM or an automatic vending machine, for example. According to US 4,697,072, a sales approval number is generated in a chipcard based on a secret PIN, entered by the user, a total transaction amount, entered by the user, and a time value, supplied by a time measuring circuit of the chipcard. The sales approval number is shown on a display of the chipcard. The sales approval number and an account number, provided on the card, are transmitted via a non-protected telephone line to a computer of the credit card company for verification of the card and its card holder. Thereby, it is made possible to authenticate the card holder and card for a one-time single transaction.

Summary of the Invention

It is an object of this invention to provide a method, a computer program product and a server for authenticating a user using a communication terminal to access the server via a telecommunications network that protect against MITM attacks that operate in real-time, wherein accessing a server is performed via a telecommunications network using a secure session established with a secure session establishment protocol.

According to the present invention, these objects are achieved through the features of the independent claims. In addition, further advantageous embodiments follow from the dependent claims and the description.

According to the present invention, the above-mentioned objects are particularly achieved in that, for authenticating a user using a communication terminal to access a server via a telecommunications network using a secure session established with a secure session establishment protocol, a personal identification code is received from the user; a data set is generated from secure session establishment protocol messages exchanged between the communication terminal and the server; a transaction authentication number is generated based on the data set, using the personal identification code; the transaction authentication number is transmitted from the communication terminal to the server; and, in the server, the transaction authentication number (and thus the user) is verified based on the secure session establishment protocol messages exchanged with the communication terminal. For example, the data set is generated in the communication terminal as a hash value from the secure session establishment protocol messages exchanged. It must be emphasized, that the transaction authentication number described herein is used as a session authentication number or session authentication code in the context of this invention; in some embodiments, the transaction authentication number is represented by a digital data set, i.e. a digital transaction authentication number. Generating the transaction authentication number based on the personal identification code and the secure session establishment protocol messages exchanged between the communication terminal and the server enables session aware user authentication that protects efficiently online users against real-time man-in-the-middle attacks.

In an embodiment, in an authentication module associated with the communication terminal and/or in the communication terminal, an authentication base number is generated from the data set, and the transaction authentication number is generated from the authentication base number, using the personal identification code. For example, the authentication base number is generated in an authentication module associated with the communication terminal. Moreover, in the server, an authentication base number is generated from the secure session establishment protocol messages exchanged, and the transaction authentication number is verified in the server using the authentication base number generated in the server and the personal identification code.

In a preferred embodiment, the authentication base number and the personal identification code are entered (by the user) into a challenge/response (C/R) token device, not connected to the communication terminal. The transaction authentication number is generated in the challenge/response token device as a token response value based on the authentication base number and the personal identification code. The transaction authentication number, i.e. the token response value, is entered (by the user) into the communication terminal, prior to transmitting the transaction authentication number to the server.

In an embodiment, the authentication base number is generated from the data set by generating a random number, by selecting from the data set selected digits, the digits being determined by digits of the random number, and by composing the authentication base number from the selected digits and the digits of the random number.

In an embodiment, a digital signature is generated from the data set, using a private key of a key pair associated with the authentication module; in the authentication module, an authentication base number is generated from the data set, using a secret token key associated with the authentication module; a transaction authentication number is generated from the authentication base number; the personal identification code is used in generating the digital signature or in generating the transaction authentication number; the digital signature is transmitted from the communication terminal to the server; in the server, the digital signature is verified using a public key of the key pair; the transaction authentication number is transmitted from the communication terminal to the server; in the server, an authentication base number is generated from the data set received from the communication terminal, using the secret token key for encrypting the data set; and, in the server, the transaction authentication number is verified using the authentication base number generated in the server.

In an embodiment, the transaction authentication number is generated from the authentication base number and the personal identification code. The transaction authentication number and a user identifier are transmitted from the communication terminal to the server. The transaction authentication number is verified in the server using the authentication base number generated in the server and a personal identification code assigned to the user identifier.

In an embodiment, the authentication module is implemented as an authentication token device removably connectable to the communication terminal. The data set is transferred from the communication terminal to the authentication module through a device interface, connecting the authentication module to the communication terminal. If applicable, the key pair and the secret token key are stored in the authentication module, and the digital signature is transferred from the authentication module to the communication terminal through the device interface.

In a further embodiment, a token identifier is transmitted from the communication terminal to the server together with the transaction authentication number and the secret token key is determined in the server based on the token identifier. A master key is stored in the server and the secret token key is generated in the server from the token identifier using the master key for encrypting the token identifier.

In an embodiment, the authentication base number is transferred from the authentication module to the communication terminal. The personal identification code is received in the communication terminal from the user, and the transaction authentication number is generated in the communication terminal from the authentication base number and the personal identification code.

In another embodiment, the personal identification code is received in the authentication module from the user. The transaction authentication number is generated in the authentication module from the authentication base number and the personal identification code, and the transaction authentication number is transferred from the authentication module to the communication terminal.

In a further embodiment, the personal identification code is received together with a biometric identifier from the user. The transaction authentication number is verified in the server using the authentication base number generated in the server and a biometric identifier stored in the server as well as a personal identification code assigned to the user identifier.

In another embodiment, the authentication base number is displayed by the authentication module. The transaction authentication number is generated by the user, from the personal identification code and the authentication base number displayed by the authentication module, and entered by the user into the communication terminal.

In yet another embodiment, after successful verification of the transaction authentication number in the server, a server authentication code is generated in the server from the data set, applying a public function to the data set and using the secret token key for encryption. The server authentication code is transmitted from the server to the communication terminal. A server authentication code is generated in the authentication module from the data set, applying the public function to the data set and using the secret token key for encryption. The authentication module verifies the server authentication code from the server based on the server authentication code generated in the authentication module. In an embodiment, the server authentication code received from the server and the server authentication code generated in the authentication module are displayed by the authentication module for visual verification by the user.

In an additional embodiment, the user selects one of multiple possible institution scopes for the authentication module. The institution scope selected by the user makes the authentication module use one institution-specific secret token key of a set of multiple secret token keys for generating the authentication base number. The server is associated with a specific institution and uses the institution-specific secret token key for generating the authentication base number. The server uses an institution-specific personal identification code for verifying the transaction authentication number.

The proposed user authentication method does not require clocks that would have to be synchronized in one way or another. Instead, it employs nonces derived from (e.g. hash values of) secure session establishment protocol messages exchanged between the communication terminal and the server (e.g. SSL/TLS) to ensure currency of the transaction authentication number.

Moreover, the security of the proposed method is not particularly undermined if the user identifier, and, for the period of time a user uses a particular transferable token, also the token identifier are stored on the communication terminal, for example by a form-pre-fill-feature of the browser. Especially, if the communication terminal is a shared workstation, this may lead to other parties and possibly adversaries learning these two values, but the proposed method is resistant to this.

The almost ubiquitous base of client-side SSL/TLS implementations does not have to be altered. For most embodiments, also client applications, such as a web browser using the SSL/TLS stack, do not have to be altered.

Operating the authenticated secure session bootstrapping is no more complex for security illiterate end-users than today's widely deployed two-factor solutions.

No end-user registration or other expensive processes are needed to implement the MITM-proof approach. An institution running a two-factor solution has to replace only the device an end-user is using (but the PINs or passwords they use remain unaltered) or amend the algorithms and protocols implemented therein (similar to known firmware updates) and adapt its own server infrastructure to work with the proposed method.

According to another object of the invention, for a user, using a communication terminal to access a server via a telecommunications network, to change a personal identification code, received from the user are an old personal identification code and a new personal identification code; a data set is generated from secure session establishment protocol messages exchanged between the communication terminal and the server; in an authentication module associated with the communication terminal an authentication base number is generated from the data set, using a secret token key associated with the authentication module; an identification change code is generated from the authentication base number, the old personal identification code, and the new personal identification code; the identification change code is transmitted from the communication terminal to the server; in the server an authentication base number is generated from the secure session establishment protocol messages exchanged, using the secret token key; and, in the server, the new personal identification code is derived from the identification change code, using the old personal identification code and the authentication base number generated in the server.

In another embodiment of authenticating a user using a communication terminal to access a server via a telecommunications network, the transaction authentication number is generated in an authentication module associated with the communication terminal as a keyed cryptographic digest value from the personal identification code and from the secure session establishment protocol messages exchanged between the communication terminal and the server, using as a key a secret shared with the server. The keyed cryptographic digest value is transmitted as the transaction authentication number from the communication terminal to the server. In the server, the keyed cryptographic digest value is generated using a personal identification code stored in the server. Subsequently, in the server, the transaction authentication number and thus the authenticity of the user is verified based on a comparison of the keyed cryptographic digest value received from the communication terminal and the keyed cryptographic digest value generated in the server. For example, the personal identification code or a secret token key, associated with the authentication module, is used as the key. The keyed cryptographic digest value is generated using a keyed cryptographic digest function, i.e. a pseudo random function such as a cryptographic hash function. In an alternative embodiment, a lookup index is generated from the data set, and in a code table (e.g. a key list) determined is a selected code using the lookup index. The selected code is used as the (hash) key and the server generates the keyed cryptographic digest value using as the (hash) key a selected code from a code table stored in the server. In a sub-embodiment, the server keeps track of previously selected codes used by the communication terminal, and the server re-initiates session establishment with the communication terminal for cases where the server determines that a selected code was previously used by the communication terminal.

In a further embodiment of authenticating a user using a communication terminal to access a server via a telecommunications network, the transaction authentication number is generated in an authentication module associated with the communication terminal as a cryptogram by encrypting the data set, the personal identification code, and a nonce, using a public key. The cryptogram is transmitted as the transaction authentication number from the communication terminal to the server. In the server, determined are the data set and the personal identification code by decrypting the cryptogram, using a private key. Subsequently,in the server verified is the decrypted transaction authentication number and thus the authenticity of the user based on a comparison of the received data set with a data set generated in the server from the secure session establishment protocol messages, and on a comparison of the personal identification code with a personal identification code stored in the server.

In an embodiment, a lookup index is generated from the data set, and in a code table (e.g. a key list) determined is a selected code using the lookup index. The selected code is additionally used in generating the cryptogram. The server determines the selected code from the cryptogram, using the private key. The transaction authentication number and thus authenticity of the user is verified by also comparing the selected code with a selected code determined by the server from a code table stored in the server. In a sub-embodiment, the server keeps track of selected codes used by the communication terminal, and the server re-initiates session establishment with the communication terminal for cases where the server determines that a selected code was previously used by the communication terminal.

According to an additional object of the invention, for authenticating a user using a communication terminal to access a server via a telecommunications network, a data set is generated from secure session establishment protocol messages exchanged between the communication terminal and the server; in the communication terminal an authentication cryptogram is generated from the data set; the personal identification code, and one or two nonces. A pre-defined public key is used for encryption. This key either belongs to the server or an authentication server in the multi-institution case. The resulting cryptogram is transmitted from the communication terminal to the server opaquely inside a regular protocol message; in the server, a data set is generated from the secure session establishment protocol messages exchanged; and, in the server, the cryptogram is decrypted using the corresponding private key. The personal identification codes, retrieved from the server database and decrypted out of the cryptogram, are compared as well as the data-set decrypted is compared with the server-calculated one. If the user desires authentication from the server to the user, then the second nonce is also decrypted from the cryptogram and sent back to the user. This approach can also be used to change the personal identification code.

According to an additional object of the invention, for authenticating a user using a communication terminal to access a server via a telecommunications network, a data set is generated from secure session establishment protocol messages exchanged between the communication terminal and the server; in the communication terminal an index is received from the server or created to look up a short key from code table (e.g. a key list) distributed out-of-band. The short key and a personal identification code are entered into the communication terminal and an authenticator - be it a cryptogram or a keyed cryptographic digest value - are generated based on the data set, the personal identification code, the short key and up to two nonces. The authenticator is transmitted from the communication terminal to the server; in the server, the data set is generated from the secure session establishment protocol messages exchanged; and, in the server, the authenticator is verified using the data set generated in the server, the personal identification code and the short key in the server database by decryption or by using a keyed cryptographic digest function e.g. by cryptographic hashing. Similarly that short key can also be used with the other embodiments described already.

Brief Description of the Drawings

The present invention will be explained in more detail, by way of example, with reference to the drawings in which:

Figure 1 shows a block diagram illustrating schematically an exemplary configuration of a computerized server, which is provided with a user authentication module and connected via a telecommunications network to communication terminals having authentication modules.

Figure 2 shows a block diagram illustrating schematically an exemplary configuration of an authentication module.

Figure 3 shows a block diagram illustrating schematically an exemplary implementation of an authentication module as an authentication token device.

Figure 4 shows a flow diagram illustrating an example of a sequence of steps executed according to an embodiment of the present invention for authenticating a user using a communication terminal to access a server via a telecommunications network ("PIN_U entered on communication terminal and TAN built on terminal").

Figure 5 shows a flow diagram illustrating an example of a sequence of steps executed according to another embodiment of the present invention for authenticating the user ("PIN_U entered on device and TAN built on device").

Figure 6 shows a flow diagram illustrating an example of a sequence of steps executed according to yet another embodiment of the present invention for authenticating the user ("TAN built mentally by the user").

Figure 7 shows a flow diagram illustrating an example of a sequence of steps executed according to a further embodiment of the present invention for authenticating the user ("Soft-Token").

Figure 8 shows a flow diagram illustrating an example of an additional sequence of steps executed according to an embodiment of the present invention for authenticating a server being accessed via a telecommunications network by a user using a communication terminal ("Server Authentication Code on device").

Figure 9 shows a flow diagram illustrating an example of an additional sequence of steps executed according to another embodiment of the present invention for authenticating the server ("Server Authentication Code by soft token device").

Figure 10 shows a flow diagram illustrating an example of a sequence of steps executed according to a further embodiment of the present invention for authenticating the user ("Challenge Response based on standard device interface).

Detailed Description of the Preferred Embodiments

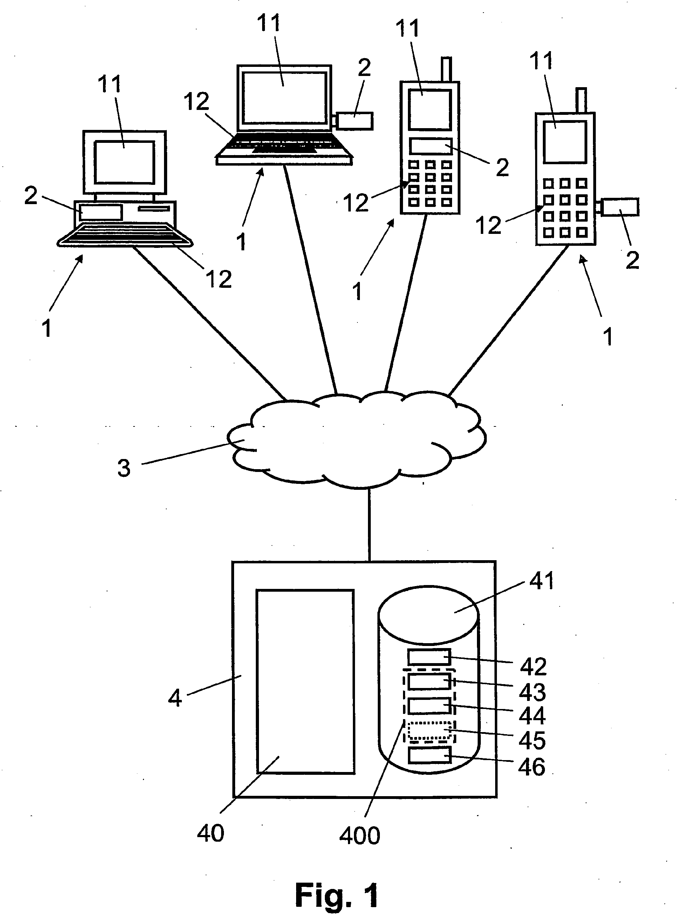

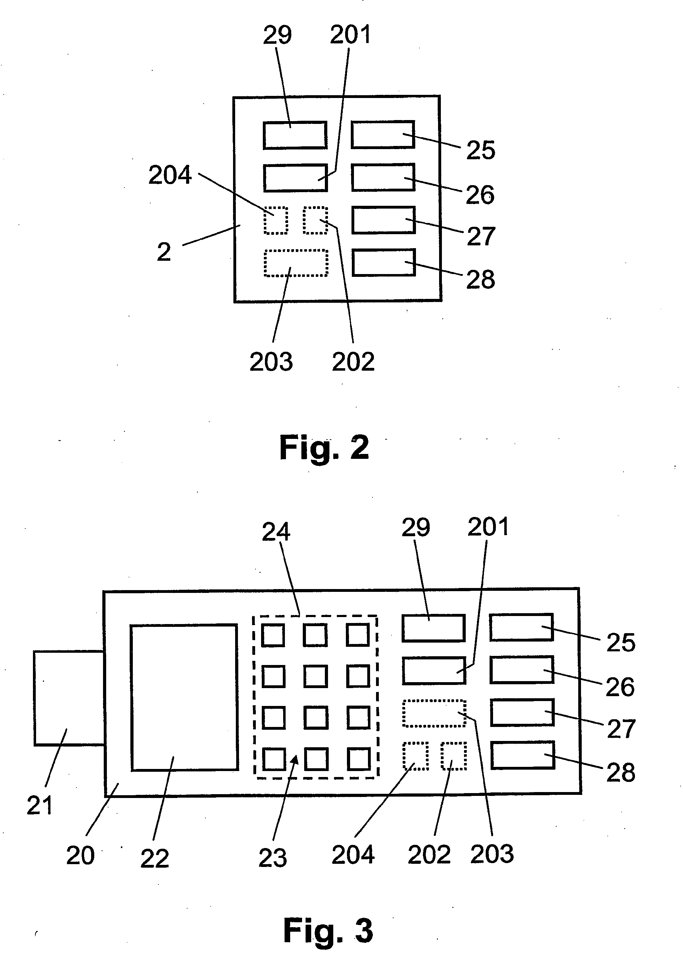

In Figure 1, reference numeral 1 refers to communication terminals configured for data exchange with computerized server 4 via telecommunications network 3. The communication terminals 1 include, but are not limited to fixed personal computers (PC), mobile laptop computers, mobile radio telephones and/or mobile personal digital assistants (PDA). The communication terminals 1 each have a display 11 and data entry means 12 such as a keyboard and a pointing device, e.g. a computer mouse, a track ball or the like. The communication terminals 1 include a client application, preferably a browser (e.g. Microsoft Internet Explorer or Mozilla Firefox), for accessing via telecommunications network 3 an on-line application hosted on server 4 through a secure session established with a secure session establishment protocol such as SSL/TLS. Furthermore, the communication terminals 1 include an authentication module 2, described later in more detail with reference to Figures 2 and 3.

The telecommunications network 3 includes fixed networks and wireless networks. For example, the telecommunications network 3 includes a local area network (LAN), an integrated services digital network (ISDN), the internet, a global system for mobile communication (GSM), a universal mobile telecommunications system (UMTS) or another terrestrial or satellite-based mobile radio telephone system, and/or a wireless local area network (WLAN).

The computerized server 4 includes one or more computers, each having one or more processors, program and data memory, as well as an operating system and an on-line application accessible to telecommunication terminals 1 through a secure session established with a secure session establishment protocol such as SSL/TLS. For example, server 4 is an Apache httpd or Jakarta Tomcat server. Furthermore, server 4 includes a user authentication module 40 and a database 41. Preferably, the user authentication module 40 and the database 41 are implemented as programmed software modules. The database 41 can include, for example, a master key (MK) 42, multiple sets of user data 400, each including a user identifier (ID_U) 43, a personal identification code (PIN_U) 44, and possibly a symmetric secret token key (K_T) 45. The personal identification code (PIN_U) 44 is a secret shared between a user and server 4 and may include biometric data (biometric identifier). Moreover, the database 41 may include a public key (k) 46. The certificate containing the public key (k) 46 may also be a user-specific part of a user data set 400, i.e. its serial number (SN_T) may temporarily be assigned with ID_U for the time a specific users employs a particular token. The user shall be able to choose whether the server shall remember the last SN_T - ID_U association or not. Doing so provides convenience even if the user plugs the token into various different communication terminals. On the other hand, loosing the token in this case may disclose the ID_U to the next user of that token - no threatening the authentication, but affecting the privacy of the user in its relation with the server.

As illustrated in Figure 2, each authentication module 2 includes several functional modules: a certification module 25, an authentication number generator 26, a display module 27, and possibly a server authentication module 28 and/or a selection module 29. Furthermore, the authentication module 2 can comprise a memory module with an asymmetric key pair $(k, k^{-1})$ 201, including a private key $(k^{-1})$ and a public key $(k)$ that is preferably integrity protected. For identification purposes, the authentication module 2 can be associated with a publicly known token identifier SN_T. Preferably, the authentication module 2 is impersonal and compliant to PKSC#11 or MS-CAPI (Microsoft Cryptographic Application Programming Interface) or another standard device interface. In an embodiment, the authentication module 2 comprises a memory module with the token identifier 203. The token identifier can also be stored on the communication terminal 1, for example by a form-pre-fill-feature of the browser. In addition, the authentication module 2 comprises either a secure memory module with a secret token key (K_T) 202 or - in a less preferable case - a memory module with a master key (MK) 204. The key pair k and $k^{-1}$ can be the same for all authentication modules 2 (a reason why the tokens can be impersonal), whereas the secret token key K_T is unique and specific for an authentication module 2. The secret token key K_T can be generated from the token identifier SN_T using the master key MK according to:

$$K\_T = E\_\{MK\} (SN\_T)$$

Consequently, there is no need to centrally store all secret token keys. Instead, the secret token key can be generated dynamically from the token identifier by anybody who knows the master key. The master key is typically possessed and held only by server 4. The master key or rather the secret token key is held in a tamper-proof key-store in a non-exportable way. It is recommended that also the token private key $k^{-1}$ is held by the same secure storage, but the latter becoming disclosed to the public may still not jeopardize the population of authentication modules 2 issued and their functioning according to the proposed method.

Preferably, the functional modules are implemented as programmed software modules. The computer program code of the software modules is part of a computer program product, preferably stored in a computer readable medium, either on a data carrier that can be inserted into the communication terminals 1, in memory integrated in the communication terminals 1, or in memory integrated in an authentication token device 20, illustrated in Figure 3, connected to the communication terminals 1.

In an embodiment, the authentication module 2 is implemented as a possibly impersonal authentication token device 20 compliant to PKSC#11. The authentication module 2 is thus a secure hardware token that participates in the secure session establishment protocol, e.g. in the SSL/TLS handshake, via a standard interface such as Cryptoki ("PKCS #11: Cryptographic Token Interface Standard" by RSA Security Inc.) or Microsoft CryptoAPI (http://msdn.microsoft.com/library/default.asp?url=/library/en-us/seccrypto/security/cryptography_cryptoapi_and_capicom.asp). As is illustrated in Figure 3, in addition to the functional modules and the memory modules described above in the context of the authentication module 2, the authentication token device 20 includes a device interface 21, data entry means in the form of data entry keys 23 or a sensor 24, and possibly a display 22. Optionally, sensor 24 is configured for entry of biometric data (biometric identifier) and includes, for example, a fingerprint reader. The device interface 21 is configured for connecting the authentication token device 20 removably to the communication terminal 1. The device interface 21 is contact-based, including e.g. a USB interface (universal serial bus), or contactless, including e.g. a Bluetooth or IrDA interface. The authentication module 2 can also be split between an off-line device (C/R or one-time-password (OTP)) and some software module in the communication terminal 1 complementing the client application software with functions such as picking randomly bits from the data set or the authentication base number.

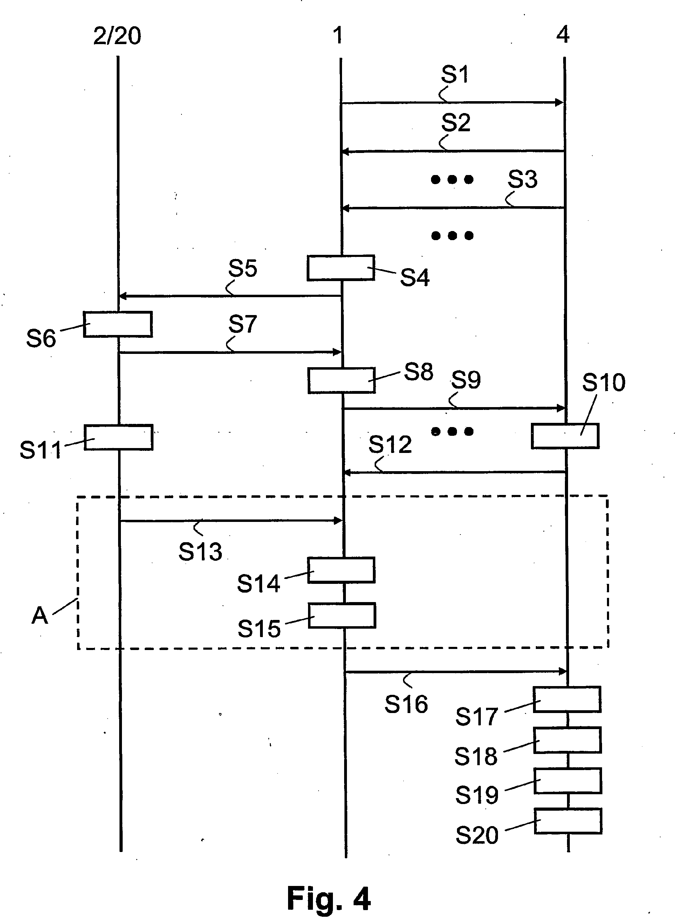

In the following paragraphs, described with reference to Figures 4, 5, 6, 7, 8, 9, and 10 are possible sequences of executing the proposed user authentication method, as well as the functionality of the user authentication module 40 and the functional modules. The basic assumption is that the user infrastructure is not necessarily running a trusted computer base, but nonetheless, it must be assumed that SSL/TLS implementation in particular is not subverted e.g. by a Trojan executable and thus operating correctly. The end-user, however is not expected to be particularly skilled in information technology, for example, being able to solidly check the validity of a server certificate in an SSL/TLS protected session is not expected. Similarly, being capable of distinguishing reliably "UBS.COM" vs. "U8S.COM" is not expected.

For accessing the on-line application hosted by server 4, the user directs the client application on his communication terminal 1 accordingly. As part of the secure session establishment protocol, for example a SSL/TLS handshake protocol, the server 4 authenticates itself using a public key certificate, it is assumed but not further addressed that the user does not properly verify this certificate as really belonging to the intended site.

As illustrated in Figure 4, in step S1, the communication terminal 1 initiates secure session establishment with server 4 according to a secure session establishment protocol, for example by transmitting to the server 4 a "ClientHello" message according to SSL/TLS.

In step S2, according to the secure session establishment protocol, the server 4 responds to the initiation message of step S1, for example by transmitting to the communication terminal 1 a "ServerHello" message according to SSL/TLS.

In step S3, as part of the secure session establishment protocol, the server 4 transmits a certification request or a "Finished" message to the communication terminal 1, for example a "CertificateRequest" or "Finished" message according to SSL/TLS.

In step S4, according to the secure session establishment protocol, a data set generating module of the communication terminal 1 builds a data set based on previous secure session establishment protocol messages exchanged with server 4. For example, the data set generating module builds the data set from previous secure session establishment protocol messages by applying a hash function according to SSL/TLS (there may be more secure session establishment protocol messages exchanged than explicitly listed here).

In step S5, the data set (e.g. a hash and named "hash" hereafter) generated in step S4 is passed to authentication module 2 or authentication token device 20, respectively. Passing information between the communication terminal 1 and authentication module 2 or authentication token device 20, respectively, may be achieved, for example, through the device interface 21 using shared memory areas in communication terminal 1 and/or authentication token device 20.

In step S6, the certification module 25 generates an electronic signature by cryptographically signing the data set received in step S5 using the private key k^{-1} from the memory module with the key pair 201. In a variant, the signing certificate tied into the signature containing the public signature validation key (k) 46 contains the serial number SN_T of the specific token used.

In step S7, the electronic signature generated in step S6 is passed to the communication terminal 1.

In step S8, the communication terminal 1 prepares a response to the certification request received in step S3, for example a "CertificateVerify" message according to SSL/TLS, including the data set generated in step S4 and the electronic signature generated in step S6.

In step S9, the secure session establishment protocol message prepared in step S8 is transmitted by the communication terminal 1 to server 4.

In step S10, using public key (k) 46, server 4 verifies the electronic signature received in step S9 on the basis of the data set received in step S9. Due to the fact that the authentication module 2 is impersonal, as k^{-1} is typically the same for all tokens, the "CertificateVerify" message does not really authenticate the client application. Instead, the "CertificateVerify" message only makes sure that a token is used by the client application to establish a secure session to the server and captures the data set for later use. If the data set generated in step S4 is based on the "Finished" message, steps S5 - S9 are not needed, and in step S10, the server 4 only captures the data set (hash) for later use. This approach is used, if there is a client extension or plugin or an external "sniffer" that can inspect the contents of the "Finished" message or the "Finished" message already encrypted. Preferably, such an extension is small, platform-independent and thus inside the client application or even integrated into the client application when manufactured.

In step S11, the authentication number generator 26 generates an authentication base number N_T from the data set (hash) received in step S5. The authentication base number N_T is generated from the data set, using the secret token key K_T associated with the authentication module 2:

$$N\_T = E_{\{K\_T\}} (hash).$$

Preferably, N_T is shortened to a defined length of the personal identification code PIN_U (in one embodiment by truncating it).

In step S12, the user authentication module 40 of the server 4 requests from the communication terminal a transaction authentication number (TAN). In the case of public key 46 being in a token-specific public key certificate as in S6, a user identifier ID_U can be transmitted along with the request for example reflecting the most recent ID_U used with the given token SN_T, i.e. the ID_U need not be entered by the user since it is already pre-filled in a HTML-form field and only needs to be corrected, if the token is used by a different user.

In step S13, the authentication base number N_T generated in step S11 is passed to the communication terminal 1.

In step S14, a control module of the communication terminal 1 requests and receives the personal identification code PIN_U from the user. Depending on the embodiment, the personal identification code PIN_U is entered using data entry means 12 or a sensor for biometric data (biometric identifier), e.g. a fingerprint reader (for example prints of different fingers are assigned different numbers or characters).

In step S15, the control module of the communication terminal 1 generates a transaction authentication number TAN from the personal identification code PIN_U received in step S14 and from the authentication base number N_T generated in step S11, for example using a pseudorandom function PRF in a way that is transparent to the user:

$$TAN = PRF_{\{PIN\_U\}}(N\_T)$$

As a sub-embodiment, the PIN can be received by the communication terminal 1 and S15 can be executed on the impersonal authentication token device 20 and the TAN then be returned to communication terminal 1.

In this case, as a sub-embodiment, the steps to generate the "CertificateVerify" message and the steps to generate the transaction authentication number TAN can be grouped differently: if the function h used to create the data set (hash) satisfies the properties of a cryptographic hash function, then for example the HMAC construction (Krawczyk, H., et al., "HMAC: Keyed-Hashing for Message Authentication," Request for Comments 2104, February 1997) can be used to implement the hash function h: PIN_U will then become an argument to the CertificateVerify calculation of a data set (hash'). In this embodiment the authentication base number N_T' becomes the transaction authentication number: TAN = N_T'. For this embodiment, it is essential that from having the data set (hash') and all but one inputs to the hash function h, namely PIN_U, it is not feasible to reconstruct PIN_U. HMAC is one function that fulfills this. HMAC can also be used for the pseudorandom function PRF and to generate the transaction authentication number TAN:

$$TAN = HMAC\_\{PIN\_U\}(N\_T) = h(K+opad||h(K+ipad||N\_T)).$$

In this case, K is derived from PIN_U in some unique and specified way (e.g., according to PKCS #5). The symbol + refers to the addition modulo 2 and II refers to the string concatenation. Opad and ipad are constant values. Especially when the user doesn't have to compute the TAN himself, other alphabets than just the decimal numbers [0.. 9] may be preferable.

The transaction authentication number TAN is valid for exactly one secure (SSL/TLS) session.

In step S16, in response to the request received in step S12, the communication terminal 1 transmits to the server 4 the generated TAN, a user identifier ID_U confirmed or newly entered by the user, as well as the token identifier SN_T entered by the user unless the token certificate containing k also comprises SN_T (as in S6 optional). SN_T is read from the memory module with the token identifier 203, or read from memory in the communication terminal 1 associated with a browser, for example.

In step S17, the user authentication module 40 of the server 4 determines in the database 40 the personal identification code (PIN_U) 44 assigned to the user identifier ID_U received in step S16.

In step S18, using the secret token key K_T associated with the authentication module 2, the user authentication module 40 generates an authentication base number N_T from the data set (hash) received in step S10. In an embodiment, the secret token key K_T is generated from the token identifier SN_T received in step S16 using the master key (MK) 42. However, if the secret token key (K_T) 45 is stored on server 4, it does not need to be recalculated with MK but can be entirely randomly chosen. If the token identifier SN_T is part of the client certificate of the token that is exchanged in the course of the secure session establishment protocol e.g. as "Client certificate" message between step S3 and S9, SN_T is not transmitted from the communication terminal 1 to the server 4 in step S16.

In step S19, the user authentication module 40 generates a transaction authentication number TAN from the personal identification code PIN_U determined in step S17 and from the authentication base number N_T generated in step S18.

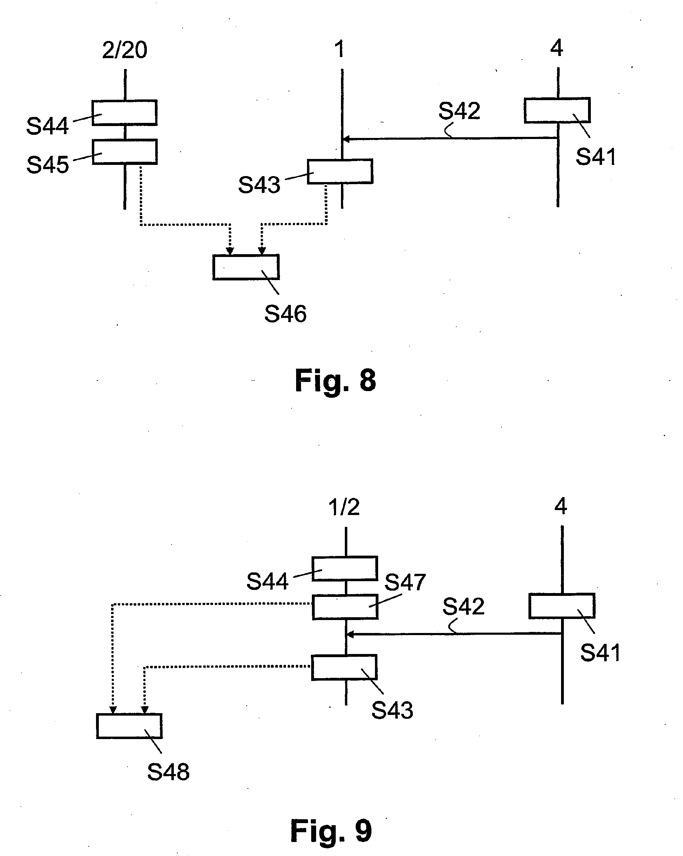

In step S20, the user authentication module 40 verifies the transaction authentication number received in step S16 through comparison with the transaction authentication number generated in step S19. Upon positive verification, the communication terminal 1 is provided access to the server 4 or, in an embodiment, the server continues in step S41 described later with reference to Figure 8.

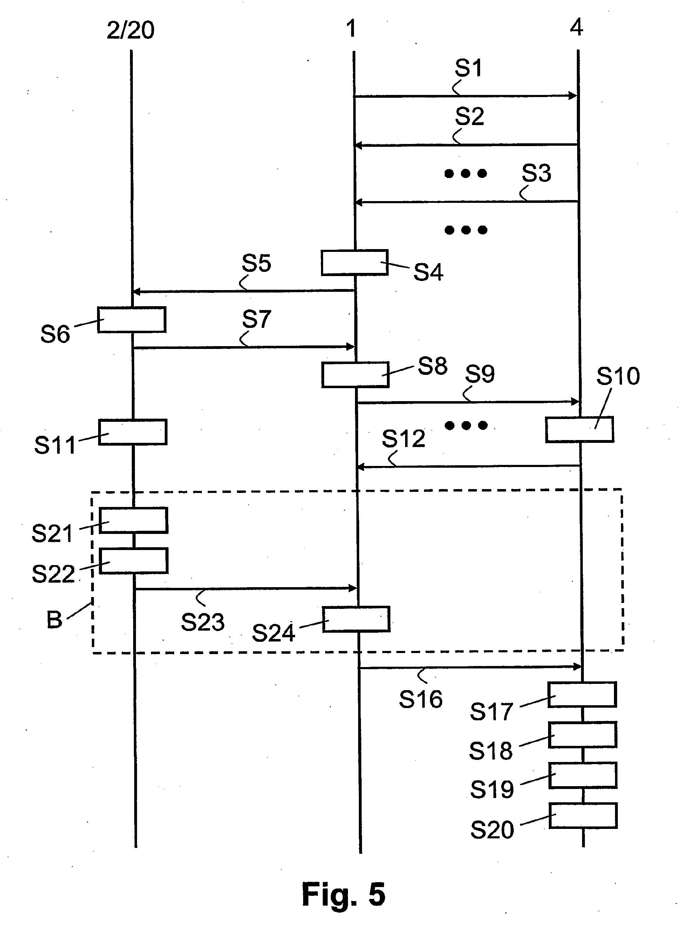

As is illustrated in Figure 5, in an alternative embodiment, block A including steps S13, S14 and S15, is replaced by block B, including steps S21, S22, S23 and S24.

In step S21, through data entry means 23 or sensor 24 of the authentication token device 20 or the authentication module 2, respectively, the personal identification code PIN_U is received from the user.

In step S22, the certification module 25 generates a transaction authentication number TAN from the personal identification code PIN_U received in step S21 and from the authentication base number N_T generated in step S11 as described above in the context of step S15. Accordingly, also the sub-embodiment described in the context of step S15 applies to the embodiment illustrated in Figure 5.

In step S23, the transaction authentication number TAN generated in step S22 is passed to the communication terminal 1.

In step S24, the transaction authentication number TAN is received in the communication terminal 1 and possibly displayed on display 11. Subsequently, the communication terminal 1 continues in step S16 as described above.

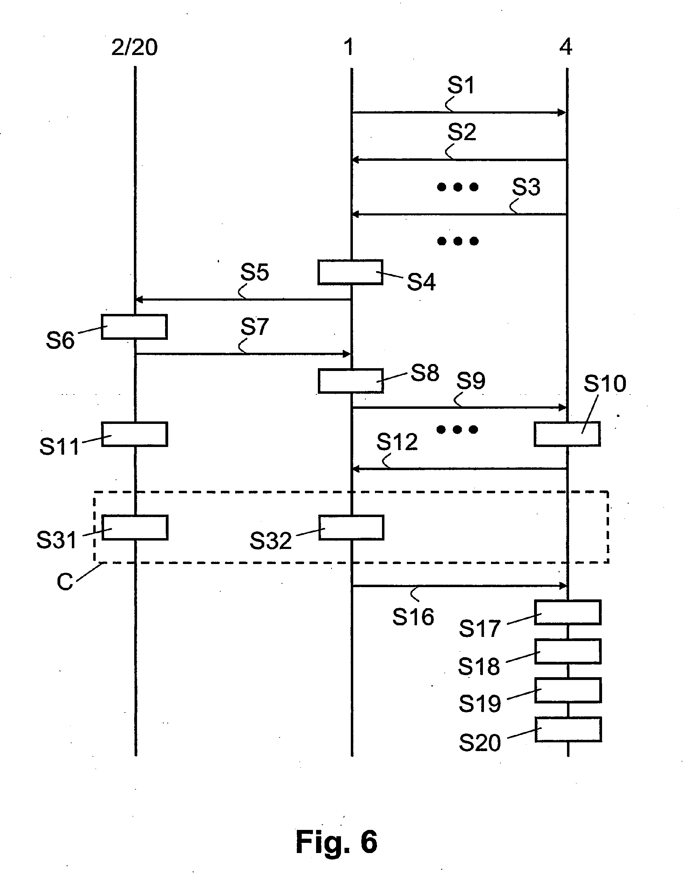

As is illustrated in Figure 6, in an alternative embodiment, block A including steps S13, S14 and S15, is replaced by block C, including steps S31 and S32.

In step S31, display module 27 shows the authentication base number N_T generated in step S11 on display 22.

In step S32, a control module of the communication terminal 1 receives from the user a transaction authentication number TAN. The transaction authentication number entered in step S32 is defined by the user as a combination of the authentication base number N_T shown on display 22 and the user's personal identification code PIN_U:

$$TAN = f(N\_T, PIN\_U)$$

In general, there are many possibilities to define an appropriate function f. In Molva, R., and G. Tsudik, "Authentication Method with Impersonal Token Cards," Proceedings of IEEE Symposium on Research in Security and Privacy, IEEE Press, May 1993, it is suggested to use the modulo 10 sum of its arguments. This suggestion is appropriate, but there are many other functions that work equally well. Another approach as per Swivel's PINsafe is, for example, to display an N_T of length 10 and use the numbers in the numeric PIN for picking. Subsequently, the communication terminal 1 continues in step S16 as described above.

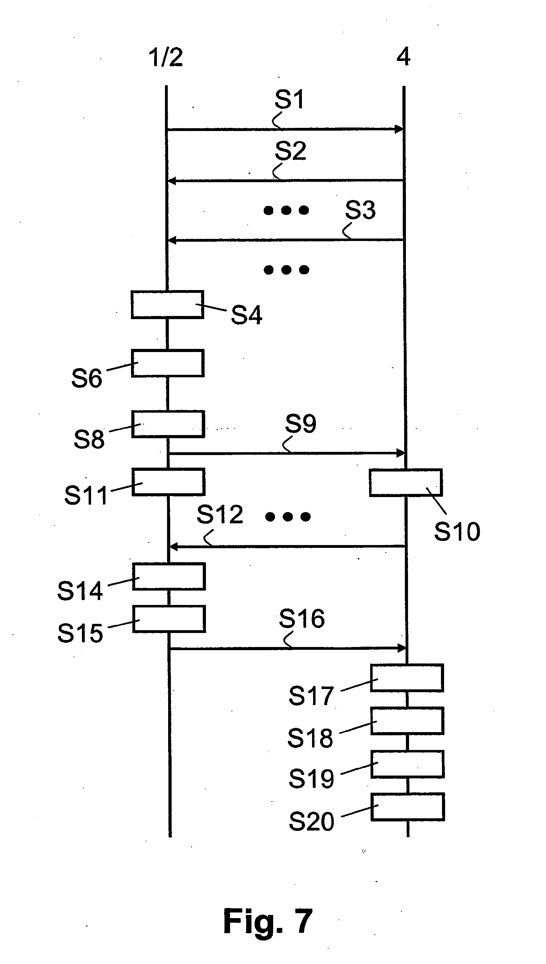

In the embodiment illustrated in Figure 7, the authentication module 2 is implemented exclusively by means of programmed software modules in communication terminal 1. Compared to the embodiment illustrated in Figure 4, the embodiment according to Figure 7 does not include steps S5, S7 and 13 because there is no data exchange between the communication terminal 1 and an authentication module (token device 20) external to the communication terminal 1. Information is exchanged between communication terminal 1 and authentication module 2 using software interfaces or shared memory areas in communication terminal 1. Otherwise, steps S1, S2, S3, S4, S6, S8, S9, S10, S11, S12, S14, S16, S17, S18, S19 and S20 are performed as described above with reference to Figure 4.

As illustrated in Figure 8, in step S41, server 4 generates a server authentication code from the data set (hash) received in step S9. The server authentication code A_T is generated by applying a public function g to the data set (hash) and by using for encryption the secret token key K_T determined in step S18:

$$A\_T = E\_\{K\_T\}(g(hash)).$$

The construction of A_T is basically the same as the construction of the authentication base number N_T. The only difference is that the data set (hash) is subject to a publicly known function g before it is encrypted with the secret token key K_T. The function g, in turn, need not be complex. It can be as simple as computing the complement of the hash value. Essential for this server authentication is that an adversary who might be able to see both the data set (hash) and the authentication base number N_T is not capable to construct A_T because of the token key K_T being secret and of the characteristics of the encryption function E_ (in one embodiment this could be a symmetric cipher such as triple-DES).

In step S42, the server authentication code generated in step S42 is transmitted to the communication terminal 1.

In step S43, the server authentication code received in step S42 is displayed by communication terminal 1 on display 11.

In step S44, the server authentication module 28 generates a server authentication code from the data set (hash) received in step S5 by applying the public function (g) to the data set and by using for encryption the secret token key K_T associated with the authentication module 2.

In step S45, display module 27 displays the server authentication code generated in step S44 on display 22.

In step S46, server 4 is authenticated by the user verifying the server authentication code displayed on display 11 through comparison with the server authentication code displayed on display 22.

In the embodiment illustrated in Figure 9, the authentication module 2 is implemented exclusively by means of programmed software modules in communication terminal 1. Compared to the embodiment illustrated in Figure 8, in the embodiment according to Figure 9, in step S47, display module 27 displays the server authentication code generated in step S44 on display 11. Furthermore, in step S48, server 4 is authenticated by the user verifying on display 11 the server authentication code from server 4 through comparison with the server authentication code from server authentication module 28.

The authentication modules 2 proposed so far can be used to authenticate a user to a single institution (using a single personal identification code). In a further embodiment, the authentication module 2 is configured for application with a multitude of institutions, i.e. for authenticating a user to servers of multiple institutions. A preferred approach for implementing a multi-institution authentication module is to replace the master key MK with a set of institution-specific master keys MK_I and the token key K_T with a set of institution-specific token keys K_{IT}, where K_{IT} refers to the secret token key that the authentication module shares with institution I. Each server 4 is associated with a specific institution and uses the institution-specific secret token key for generating the authentication base number. Similar to the single-institution setting, a secret token key K_{IT} can be generated dynamically according to:

$$K_{\{IT\}} = E_{\{MK\_I\}}(SN\_T)$$

This key is then used to generate institution-specific values for the authentication base number and the transaction authentication number:

$$N_{\{IT\}} = E_{\{K\_{\{IT\}}\}}(Hash),$$

and

$$TAN = f(N_{\{IT\}}, PIN_{\{IU\}}).$$

The resulting TAN can then be used by the user for authentication to (the server 4 of) institution I. The personal identification code $PIN_{\{IU\}}$ is not only user-specific but also institution-specific. Thus a multi-institution authentication module is associated with multiple institution-specific secret token keys either by having stored a set of multiple institution-specific secret token keys or by having stored sets of multiple institution-specific token identifiers and master keys for generating dynamically the institution-specific secret token keys. The selection module 29 is designed for the user to select one of multiple possible institution scopes for the authentication module 2 or the authentication token device 20, respectively. Set to an institution scope selected by the user, the authentication module 2 uses one respective institution-specific secret token key for generating the authentication base number. For example, the selection module 29 presents to the user a list of supported institutions on display 22 or 11, and receives user selections through data entry means 23 or 12. In an alternative implementation, specific keys of the data entry means 23 or 12 are assigned to specific institutions.

In a further embodiment where the authentication module 2 does not securely hold multiple $K_{\{IT\}}$s but only one, an online overarching issuing institution (AS) is added. This increases the flexibility of the set of institutions being part of the issuing group of the authentication module 2. The authentication module 2 creates a nonce R_T. The user has to copy two values from the display of authentication module 2, i.e. instead of SN_T, a TAN_AS is generated instead and needs to be entered after the successful SSL/TLS session establishment during the user authentication phase:

$$\cdot \; TAN\_I = f'(R\_T, PIN\_U\_I)$$

$$TAN\_AS = E\_MK(R\_T, Hash, ID\_I),$$

where ID_I is a short identifier string such as "XYZ" for "institution XYZ".

Institution I sees both values and cannot do anything with them alone. Institution I forwards TAN_AS to the issuing institution AS and receives R_T and Hash in return. It is assumed that the connection between AS and I is mutually authenticated and confidential.

Unless with criminal intent, TAN_I is never seen by the issuing institution AS and thus there is no risk that the issuing institution AS can determine PIN_U_I. However, it is recommended in this embodiment to only choose an f' that is a strong cryptographic hash function as discussed before.

Similarly, this approach protects institutions I_1 ... I_n from attempting to learn each other's users' PINs.

This embodiment simplifies greatly the addition of new institutions. In essence, additional ID_I_n strings can be simply added to authentication modules 2. If the authentication module 2 is flooded with bogus ID_I strings, this becomes a usability concern but doesn't really undermine the security of the proposed method otherwise.

In an embodiment, the authentication module 2 or the authentication token device 20, respectively, is used to complement a "one-time-password" (OTP) system (e.g., Lamport-style OTPs (Lamport, L., "Password Authentication with Insecure Communication," Communications of the ACM, Vol. 24, 1981, pp. 770-772) or SecurID tokens (http://www.rsasecurity.com/)). In this case, the user employs the OTP as input for PRF of step 15 or f (instead of PIN_U). Often OTPs contain the PIN_U. Everything else remains essentially the same. While being a small change in the protocol, this allows using the software variant with a two factor security element already in use, such as RSA's SecurID.

In another embodiment a biometric authentication step is added before the authentication token device 20 is activated. This implies that the token is personalized in a separate process and only starts serving an at least "temporary" owner of the token if the biometrics match.

In a further embodiment, if the biometric characteristics B_U of the user are not used to enter the PIN_U as described before, the biometric data is included in the calculation of the authentication base number N_T. Also, the server in this embodiment stores B_U on top of PIN_U and thus, the authentication module 2 remains fully personally transferable.

$$N\_T" = E\_\{K\_T\}(Hash, B\_U)$$

It must be pointed out that different sequences of steps illustrated in Figures 4, 5, 6, 7,8 and 9 are possible without deviating from the scope of the invention.

Embodiment for Changing the Personal Identification Code

From an end-user education perspective, it is important to have a simple behavioral guideline. For all embodiments described, this certainly will be "Never enter your current or a new personal identification code into the web-browser!" For the embodiments including additional hardware, such as a module for entering the personal identification code as in Figure 5, the guideline will even be: "Never enter the PIN into your screen with your main keyboard!". Preferably, however, it must be possible for the user to change periodically and on his initiative his personal identification code PIN_U.

For example, for changing the personal identification code PIN_U, another secure session is established, essentially executing the same steps as described above. Particularly, as shown in Figures 4, 5, or 7, subsequent to steps S1 to S10, in step S11 an authentication base number N_T is generated.

Responsive to user or server instructions related to changing the personal identification code PIN_U, in step S14 or step S21, respectively, the old personal identification code PINold_U and a new personal identification code PINnew_U are received from the user in the communication terminal 1, the authentication token device 20, or the authentication module 2, respectively. Preferably, to avoid typing errors, the new personal identification code PINnew_U is confirmed through double entry.

In steps S15 or S22, respectively, rather than generating a transaction authentication number TAN, an identification change code (PCC) is generated. Essentially, the PRF used for calculating the PCC must make the personal identification code recoverable. For example an exclusive-or (XOR) function has this characteristic.

The PCC then is computed as PCC = $f_0$(N_T, PINold_U , PINnew_U) for an appropriately chosen function $f_0$. For example, if f represents a digit-wise addition modulo 10, $f_0$ can be defined as:

$$f_0 (N\_T, PINold\_U, PINnew\_U) = f(f(N\_T, PINold\_U), PINnew\_U).$$

For example, if N_T = 123, PINold_U = 345, and PINnew_U = 781 then f(N_T, PINold_U) = 468 and f(f(N_T, PINold_U), PINnew_U) = 149.

Subsequently, in steps S16, S23, S24, the identification change code (PCC), rather than the transaction authentication number TAN, is communicated to the server 4. Steps S17 and S18 are performed as described above. In steps S19 and S20, consequently, rather than verifying the transaction authentication number TAN, the server 4 derives PINnew_U from the PCC submitted by the user, while ensuring (through verification of PINold_U) that it really was the legitimate user who changed the personal identification code PIN_U and not somebody who for example exploited an unlocked terminal, where an ongoing session was left unattended by the legitimate user. In the example given for $f_0$, no defense against blind permutation attacks that could lead to a denial of service is given. However, in the context of the currently predominant session establishment protocols (SSL/TLS), complementary message integrity protection will prevent this attack.

In another embodiment changing the personal identification code PIN_U is implemented with three secure session establishments.

Number one, where the user has to re-provide PINold_U; number two, where the user presents PINnew_U; and number three, where the user represents the PINnew_U to avoid typing errors.

If the PIN-change is server-initiated, in order to signal the state of this protocol, the server can advertise pseudo-"DistinguishedName certificate_authorities" as outlined in http://www.rfc.net/rfc2246.html#s7.4.4. - a different authority for each of the three steps. Similarly, the token would need to have four different certificates, namely one for regular authentication and three for this embodiment.

Alternatively, when calculating the authentication base number $N\_T$, the authentication token device 20, or the authentication module 2, respectively, includes a step-identifier. Thus, the number of different certificates needed on the authentication token device 20, or the authentication module 2, respectively, could be reduced.

If the change of the personal identification code is client-initiated, the server should at least offer two CAs, one for the regular authentication and one for step 1 of the change of the personal identification code.

Embodiment with Encryption-free Authentication Module

In another embodiment, the authentication token device 20, or the authentication module 2, respectively, does not need to be configured for encryption.

In this embodiment, the authentication base number $N\_T$ is calculated by means of a cryptographic hash function such as HMAC using the token key $K\_T$ as a secret. This offers the same security at some less computational overhead. The need for a shared secret and secure storage persists with this embodiment. For example, the cryptographic hash (CH), as outlined in the sub-embodiment described in the context of step S15, can be used to replace the encryption used in step S11:

$$N\_T = CH\_\{K\_T\}\ (hash).$$

This applies also to the other uses of encryption such as in steps S41 or S44.

Embodiments with an Alternative Transaction Authentication Number (TAN)

In this embodiment, the personal identification code PIN_U is entered after step S4, in a manner as described previously (Figure 4) in the context of steps S14 or S21. Subsequently, a keyed cryptographic digest value, e.g. a cryptographic hash, is generated from the personal identification code and from the secure session establishment protocol messages exchanged between the communication terminal and the server 4. For protocol flow, but not security purposes, it may be useful to also include the serial number $SN\_T$ in this step. The keyed cryptographic digest value, is generated with a keyed cryptographic digest function, e.g. a so-called "keyed hash function" using as a (hash) key a secret shared with the server 4. Depending on the embodiment, used as a (hash) key are the token key $K\_T$, the personal identification code PIN_U, or a pre-master-secret used as the basis for establishing the session key in the secure session establishment protocol. Particularly, if the personal identification code PIN_U is a well-chosen secret, the personal identification code PIN_U can be used as the (hash) key. Thereby, the authentication token device 20 is relieved from having its own secret token key $K\_T$ or private signing key k-1 or both, such that the authentication module 2 or authentication token device 20, respectively, is only a "trusted observer". The server 4 will immediately detect if any application level instruction, such as "send a large money amount to person xyz", comes from within the authenticated SSL session or not.

For example, in step S5, the data set (hash), generated by the communication terminal 1 from the secure session establishment protocol messages exchanged with server 4, and the personal identification code PIN_U are passed to the authentication module 2 or authentication token device 20, respectively. In step S6, the certification module 25 generates the cryptographic hash from the data set (hash) and the personal identification code PIN_U. Generating the electronic signature in step S6 is optional. In step S7, the cryptographic hash (with or without electronic signature) is passed to the communication terminal 1. In this sub-embodiment, the PIN_U can also only be entered by the user in step S6 directly into authentication token device 20.

Alternatively, the cryptographic hash is generated in step S4 from the personal identification code PIN_U and from the secure session establishment protocol messages exchanged between the communication terminal 1 and the server 4. Consequently, steps S5 to S7 are omitted because all the necessary steps are performed in step S4.

In step S8, the communication terminal 1 prepares a response to the certification request received in step S3, for example a "CertificateVerify" message according to SSL/TLS, including the cryptographic hash generated in step S6 or S4, respectively, and a user identifier ID_U confirmed or newly entered by the user.

In step S10, the server 4 generates the cryptographic hash, using the user's personal identification code stored in the server 4, and verifies authenticity of the user based on a comparison of the cryptographic hash generated in the server 4 and the cryptographic hash received from the communication terminal in step S9. Upon positive verification, the communication terminal 1 is provided access to the server 4, for example. Thus the cryptographic hash is generated, exchanged and verified as an alternative data element for the transaction authentication number TAN described above.

If the server 4 is to be authenticated to the user, the server 4 continues in step S41. However, in a further sub-embodiment, the server authentication code A_T is displayed immediately after steps S4-S6.

Embodiments with External Challenge/Response Device

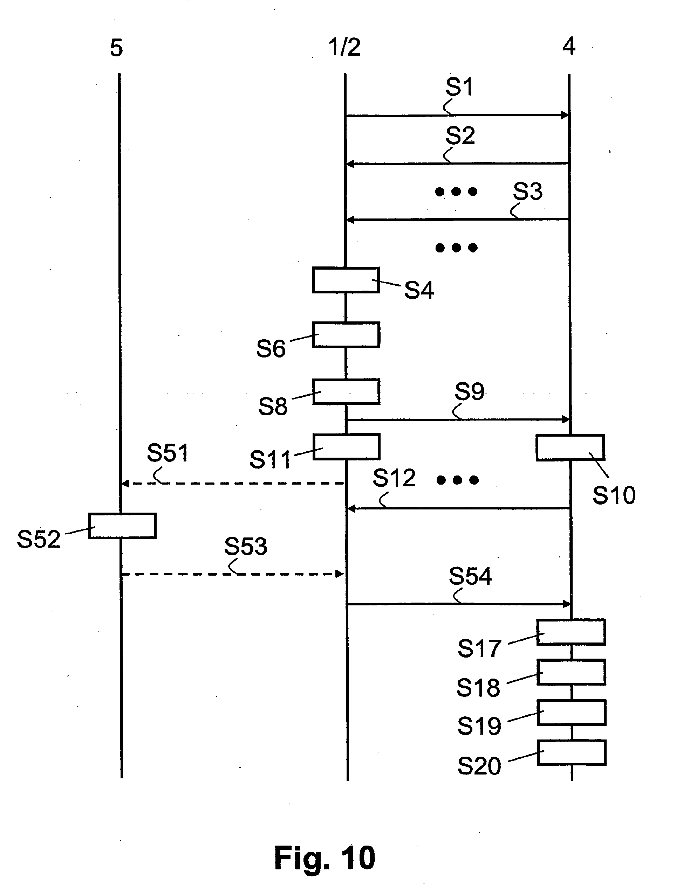

In this preferred embodiment, the authentication module 2 is implemented exclusively by means of programmed software modules in communication terminal 1, as illustrated in Figures 7 and 10. Steps S1, S2, S3, S4, S6, S8, S9, S10, and S11 are performed essentially as described above with reference to Figure 4. As part of step S11, the authentication base number N_T is shown on display 11. In a sub-embodiment, the authentication module 2 acts as a trusted observer only and the authentication base number (N_T''') is generated as a short derivative (e.g. 6 or 8 digits) of the data set generated from the protocol messages, e.g. from the regular CertificateVerify message. Essentially, the authentication base number N_T can be any other session-related identifier that cannot be determined by a MITM in an exploitable way, for example a short digest of the session-key and the server public key might be another way to compute the authentication base number N_T as a secure session identifier, resistant to MITM attacks. The hash of the "Finished" message or the encrypted "Finished" message, or the entire sequence of out-side observable handshake messages are other candidates to constitute this session-related identifier (N_T or N_T''', respectively) and are described more in detail below. In this embodiment, having a secret token key K_T to construct the N_T is therefore optional. Similarly, the private signing key k-1 may be optional as well.

Subsequently, as illustrated in Figure 10, in step S51, the user enters the authentication base number N_T (as a client-side-generated challenge) and his personal identification code PIN_U (e.g. as a code or biometric data) into a conventional C/R token device 5 that is not connected to the communication terminal 1. In step S52, responsive to the values entered in step S51, the C/R token device 5 generates and displays a token response value based on its own logic. In step S53, replacing steps S14 and S15, the user enters the token response value from the C/R token device 5 as a transaction authentication number into the communication terminal 1.

In step S54, in response to the request received in step S12, the communication terminal 1 transmits to the server 4 the token response value previously entered as the transaction authentication number TAN.

Essentially, steps S17 to S20 are performed by the server 4 as described above with reference to Figure 4 or 7, respectively; however, corresponding to the logic of the C/R token device 5, the server 4 generates and verifies the token response value as the transaction authentication number TAN. Upon positive verification of the transaction authentication number, i.e. the token response value, the communication terminal 1 is provided access to the server 4 or, in an embodiment, the server 4 continues in step S41, as illustrated in Figure 8 or 9, respectively.

For example, the C/R token device 5 is based on EMV chips (Europay International, MasterCard International and Visa International), in circulation on millions of bank- and credit-cards (see http://www.emvco.com). Some token response values generated by EMV chips do not include the personal identification code PIN_U. The card ICC as per the MasterCard Chip Authentication Program (CAP) shares a key with the server (Issuer) that has a role similar to the previous K_T. After correct entry of the personal identification code PIN_U and a challenge (authentication base number N_T), a cryptogram (typically with 3DES) will be created that contains among others (e.g. CW), the challenge, and the authoritative confirmation that a correct personal identification code PIN_U has been presented. Typically, an unconnected reader with a numeric keypad is used to enter the authentication base number N_T and the personal identification code PIN_U and the token response value is displayed on the unconnected reader's display. In the case of the authentication base number N_T''' being shortened to 4 or 6 digits, for example, the likelihood increases significantly that an MITM can establish a secondary fraudulent session with the client on the terminal whose short data set (hash)-dependent input to the authentication base number N_T''' has a collision with the primary fraudulent session opened between the server and the MITM. The MITM can probably verify off-line whether or not a collision was found, without either party noticing the non-colliding guesses. In order to prevent such an attack, the "shortening" algorithm must not be a simple hashing or one-way digest function known entirely to the MITM, but needs to have further characteristics. Basically, guessing off-line the "session awareness" is required to be as unattractive to the MITM as guessing off-line the personal identification code PIN_U for any other type of attack when using a C/R device 5. This means that finding a collision in the shortened hashes must no longer be off-line verifiable, but should require an exchange with an online authority, i.e. a server that limits the number of guesses. The symmetric key of the C/R token device 5 - having a higher entropy than a user can be expected to remember as a password - is used to conceal the pseudo-random selector from the MITM through encryption. This essentially forces the MITM to find collisions on the full 36 byte long hash (data set) which is hardly feasible.

Thus, in an embodiment, as part of step S11, on the client-side, the authentication module 2, e.g. as part of the client application (e.g. the browser), generates a short random number, e.g. 4 digits, subsequently referred to as "random picking digits". This random number is used to pick arbitrary bits from the data set generated from the protocol messages, for example from the 36 bytes hash of the "CertificateVerify" or "Finished" message of the TLS-handshake, the arbitrary bits representing another 4 digits, for example. Subsequently, the latter 4 digits and the "random picking digits" are shown to the user on display 11 as a shortened authentication base number N_T'" of 8 digits, for example. In step S51, the user enters this authentication base number N_T'" (as the client-side-generated challenge) and his personal identification code PIN_U into the C/R token device 5 as described above with reference to Figure 10. Steps S52 to S54 remain the same as described above in the context of Figure 10.

For that the "random picking digits" NOT be known to the MITM, the algorithm on the C/R token device 5 is adapted such that the "random picking digits" are sent to the server 4 in encrypted form. This means that the token response value generated by the C/R token device 5 as a transaction authentication number comprises the "random picking digits" in encrypted form. Consequently, the server 4 is configured to recover the "random picking digits" from the response it receives. For example with 3DES (or another encryption system with a block length of e.g. 64 bits) the response is 64 bits. For example, for the response, an alphanumeric character set of 32 characters is allowed for, thus the response will be 13 characters long. Consequently, a user will have to copy 13 alphanumeric characters from the C/R token device 5 to the client application, e.g. into a browser form field. In light of users regularly typing 19 digits of credit card numbers (including the CW), typing 8 digits for the challenge plus 13 characters for the response is considered to be acceptable from a usability stand-point. The security of this approach increases or decreases relative to the lengths of challenge and response.

On the server side, step S18 is changed such that the "random picking digits" are decrypted, using the secret token key K_T, and then used to pick from the data set (hash) the shortened input to calculate the shortened authentication base number N_T'". Everything else remains as before.

As a further embodiment, the authentication base number N_T is entered into the device via other means than by the user typing it into a keyboard such as for example graphical flickering as described on http://axsionics.ch. The important enhancement is that the flickering-challenge, normally entirely created by the server, needs to be amended by some client-side-generated secure session identifier. Since the implementation of this flickering method preferably has some client-side active component, such as a browser (Java) plugin, Flash, or javascript, in some embodiments, this can be used to retrieve, for example, the server public key and a digest of session key or other types of the secure session identifier, and include it into the flickering-image generation, i.e. the pertinent protocol's challenge. This active component is preferably signed because a MITM will otherwise easily inject an altered version of this that might present the authentication base number N_T of the MITM instead of the authentication base number N_T genuinely built in the client communication terminal 1.

In a further sub-embodiment ("No client-certificate authentication during the handshake"), a client application software module of the communication terminal 1, for example a browser, is provided with an authentication number generator 26 configured to calculate the authentication base number $N\_T^{iv}$ as a secure session identifier, resistant to MITM attacks, through read-only access to the secure session establishment protocol stack or even by being able to sniff/capture the protocol messages as an "outsider". Thus, in this sub-embodiment, there is no need to perform client certificate authentication, i.e. there is no need to perform steps S3-S10 for a unilateral secure session and token device drivers such as MS-CAPI or PKCS11 are no longer needed.

The above-mentioned authentication number generator 26 is configured to calculate, in step S11, the authentication base number $N\_T^{iv}$ as a secure session identifier, resistant to MITM attacks, as outlined below:

a) the authentication base number $N\_T^{iv}$ is generated based upon a data set (hash), based on secure session establishment protocol messages exchanged between the communication terminal 1 and the server 4, that cannot be known by the MITM (e.g. due to having the premaster-secret prior to be encrypted as input); or

b) the authentication base number $N\_T^{iv}$ is generated from known input data and a secret key, albeit in this embodiment, the need for a secret token key K_T in the client application should be avoided; or

c) the authentication base number $N\_T^{iv}$ is generated based upon input data that all are known to the MITM as well, but by their logical connection to the secure session establishment protocol, they ensure resistance against an MITM. In this embodiment, using the public key of the server and something that ensures freshness (nonce or timestamp) would be sufficient. For example the hash of the encrypted premaster-secret, i.e. a message observable by the MITM, could serve as such a nonce. In this case, it is important the C/R token device's logic ensures that by knowing the challenge and observing the response, the MITM cannot mount a(n offline) PIN-guessing attack.

For example, the authentication number generator 26 is configured to display this MITM-resistant secure authentication base number $N\_T^{iv}$ (challenge) in the client application. For instance, the authentication number generator 26 makes the challenge visible to the user in a defined area, e.g. in the bottom right of the browser, when the user moves the pointer of the mouse over this area, e.g. over the lock displayed in the browser.

As described above, the user enters the authentication base number $N\_T^{iv}$ (as challenge) and his personal identification code PIN_U into the C/R token device, and the method proceeds as described above.

Embodiments Without Secret Keys but Nonces on the Client Side

As outlined in the Request for Comments 2246, there is a possibility of overloading the structure of the CertificateVerify message with an arbitrary response instead of the PKCS1 encoded signature. This offers the possibility that the token no longer needs a secret token key K_T. In this embodiment, in analogy to "Embodiments With Alternative Transaction Authentication Number (TAN)" described above, in step S6, the authentication module 2 or authentication token device 20, respectively, generates a cryptogram by encrypting the hash (data set), the personal identification code PIN_U, and additionally one or two truly random nonces N_Tt (and N_Ta) with a public key k_S (a nonce being a "number used once"). The public key k_S, in turn, must be pre-installed on the authentication module 2 or authentication token device 20, respectively, to prevent an MITM to fool the system into using his own key k_MITM. The public key k_S either belongs to server 4 or an authentication server AS in the multi-institution case (the authentication server being associated with public key K_AS). Optionally, the input values of the cryptogram are signed with the secret key k-1, prior to being encrypted with the public key k_(A)S. Similarly, as per the sub-embodiment of S15, a cryptographic hash function (HMAC) can be applied before the encryption.

In step S7-S9, instead of transmitting an "electronic signature", as required by most "secure session establishment protocols", this cryptogram is transmitted as unstructured data, without any restrictions imposed by protocol specifications. In implementations where other protocol parts are also executed on an authentication token device 20 and not in a client application of the communication terminal 1 - for example generating the session key - other protocol messages such as the "ClientKeyExchange" message could be used to transmit the cryptogram.

In step S10, the server 4 decrypts the cryptogram. This will provide to the server the nonce N_Tt, the personal identification code PIN_U, and possibly the nonce N_Ta. The nonce N_Tt is a "throw-away" nonce, added as a salt to prevent pin guessing attacks.

In step S10, server 4 also generates the "hash" as described in the context of step S4. Steps S11-S17 are not needed.

In steps S18-S20, the authentication module 40 no longer generates the authentication base number N_T and the transaction authentication number TAN, but simply compares the hash, and PIN_U as decrypted in step S10. The hash derived from the cryptogram is compared with the hash generated in the server 4, and the personal identification code PIN_U is compared with the one stored in the database 41. If the cryptographic hash function is used in S6, these values first also need to be cryptographically hashed on the server side before the comparison. All else remains equal. Thus the cryptogram or the cryptographic hash, respectively, is generated, exchanged and verified as an alternative data element for the transaction authentication number TAN described above.

If the server 4 shall also authenticate the server 4 to the user, instead of the calculations of steps S41 to S43, the server simply displays to the user the nonce N_Ta that it decrypted from the cryptogram. The comparison of steps S44-S46 remain the same; no calculations are needed, but the nonce N_Ta is simply displayed on display 22.

As an addition to this embodiment also a protocol to change the personal identification code PIN_U can be implemented. The new personal identification code PIN_U simply is another input to the cryptogram of S6.

Despite the fact that the secure session establishment protocol standards do not specify fixed field lengths for their protocol fields, some client application implementations may rigidly limit the allocated memory, e.g. for the "CertificateVerify" message. In such cases a focus on space optimizing public key cryptography, such as elliptic curve cryptography, is needed.

There is also a sub-embodiment to this embodiment where the personal identification code PIN_U is calculated by the user. For this purpose, in step S6, the personal identification code PIN_U is omitted. The nonce N_Tt is displayed to the user as described for step S31, and a transaction authentication number TAN is calculated as described for step S32. Other variants for generating the transaction authentication number TAN from the authentication base number N_T and the personal identification code PIN_U described above can be applied analogously to the authentication base number N_T.

Embodiments with Short, (Possibly Single-use) Secret Keys

Code (or key) tables such as scratch-lists or indexed scratch lists (e.g. "iTAN", "indexed scratch lists", "Access Card") are broadly used by financial institutions, but they are vulnerable to men in the middle attacks. The above "Embodiments Without Secret Keys but Nonces on the Client" can be extended to achieve a level of "two factor" authentication:

Step S6a (in Figures 4, 5, 6, and 7 represented as step S6): If an Access Card has for example 100 entries, i.e. typically short "keys" of 4-6 numerical characters (K_SSU), the data set generated in step S4 (hash of the previous handshake message) is compressed until it can serve as a lookup index on the key table of the Access Card.

In S6b (in Figures 4, 5, 6, and 7 represented as step S6), the compressed value - typically 2 characters long - is displayed as an index (for example by the authentication module 2 or authentication token device 20). There are alternative ways to communicate the look-up index to the client application, for example the above-mentioned "DistinguishedName certificate_authorities" list as a "hidden channel" may represent another approach to let the authentication module 2 or authentication token device 20, respectively, know what index to display in step S6b.

In step S6c (in Figures 4, 5, 6, and 7 represented as step S6), in addition to the values entered previously in step S6, entered also is the key K_SSU looked up by means of the session-derived lookup index. Due to the high degree of randomness of the nonce N_Tt, the key K_SSU can be used several times. If the client applications do not allow to transport cryptograms that are longer than the normal messages in the secure session protocol establishment messages (in particular, the CertificateVerify message), there is yet another embodiment based on "Embodiments Without Transaction Authentication Number (TAN)" and the above is extended by the following steps:

Step S6a remains as described above. Because the randomness of the nonce N_Tt is not available, such a key K_SSU can only be used once. In step S6b' (replacing step S6b), the server 4 records all lookups used so far. If there is a collision, a re-handshake is triggered by the server 4. This is repeated until an unused index is reached. The "DistinguishedName certificate_authorities" approach may be more efficient in this case. After a certain level of usage a new Access Card is distributed out-of-band.

In step S6c' (replacing step S6c), the cryptographic hash is generated without nonces and instead of the secret key K_T, and the key K_SSU is used. Then, again the subsequent steps remain up to step S15. In step S15, because the key K_SSU is short, it is important that the cryptographic hash function is such that a valid cryptographic hash N_SSU = CH_{K_SSU} (hash, PIN_U) cannot only be obtained by one pair of a personal identification code PIN_U and a key K_SSU, but many pairs of personal identification codes PIN_U and keys K_SSU - up to the size of the combined "key-space" of both the personal identification code PIN_U and key K_SSU. By this, an attacker will not know whether he has found the correct personal identification code PIN_U in a guessing attack, but will always have to present the cryptographic hash N_SSU to the server 4 in order to validate his guesses. Also because the hash is typically 40 bytes long, guessing dictionaries need to be much longer than this combined key - on top of binding the session to the authentication, here the hash serves as a "salt". If this key space has sufficient entropy, such that a guessing attack takes longer than a typical server-side login timeout, this can serve as a low-end solution.

To prevent key logging attacks on the personal identification code PIN_U, instead of entering separately into the terminal the personal identification code PIN_U and the key K_SSU, a combination thereof may be entered instead.

Similarly, the key K_SSU could also be used with the main and other embodiments described above based on transaction authentication numbers TANs.

## Claims

1. A method of authenticating a user using a communication terminal (1) to access a server (4) via a telecommunications network (3) through a secure session established with a secure session establishment protocol, the method comprising:

   receiving from the user a personal identification code;
   generating a data set from secure session establishment protocol messages exchanged between the communication terminal (1) and the server (4);
   generating a transaction authentication number based on the data set, using the personal identification code;
   transmitting the transaction authentication number from the communication terminal (1) to the server (4); and
   verifying in the server (4) the transaction authentication number based on the secure session establishment protocol messages exchanged with the communication terminal (1).

2. The method according to claim 1, wherin the method further comprises generating in an authentication module (2) associated with the communication terminal (1) an authentication base number from the data set; wherein the transaction authentication number is generated from the authentication base number, using the personal identification code; wherein the method further comprises generating in the server (4) an authentication base number from the secure session establishment protocol messages exchanged; and wherein the transaction authentication number is verified in the server (4) using the authentication base number generated in the server (4).

3. The method according to claim 2, wherein the method further comprises entering the authentication base number and the personal identification code into a challenge/response token device, not connected to the communication terminal (1); wherein the transaction authentication number is generated in the challenge/response token device as a token response value based on the authentication base number and the personal identification code; and wherein the method further comprises entering the transaction authentication number into the communication terminal (1), prior to transmitting the transaction authentication number to the server (4).

**4.** The method according to one of the claims 2 or 3, wherein generating the authentication base number from the data set comprises generating a random number, selecting from the data set selected digits, the digits being determined by digits of the random number, and composing the authentication base number from the selected digits and the digits of the random number.

**5.** The method according to claim 1, wherein the transaction authentication number is generated in an authentication module (2) associated with the communication terminal (1) as a keyed cryptographic digest value from the personal identification code and from the secure session establishment protocol messages exchanged between the communication terminal (1) and the server (4), using as a key a secret shared with the server (4); wherein the method further comprises generating in the server (4) a keyed cryptographic digest value using a personal identification code stored in the server (4); and wherein the transaction authentication number is verified in the server (4) based on a comparison of the keyed cryptographic digest value received from the communication terminal (1) and the keyed cryptographic digest value generated in the server (4).

**6.** The method according to claim 5, using as the key one of the personal identification code and a secret token key associated with the authentication module (2).

**7.** The method according to claim 5, wherein the method further comprises generating a lockup index from the data set; wherein the method further comprises determining in a code table a selected code using the lookup index; wherein the selected code is used as the key; and wherein the server (4) generates the keyed cryptographic digest value using as the key a selected code from a code table stored in the server (4).

**8.** The method according to claim 7, wherein the server (4) keeps track of selected codes used by the communication terminal (1); and wherein, for cases where the server (4) determines that a selected code was previously used by the communication terminal (1), the server (4) re-initiates session establishment with the communication terminal (1).

**9.** The method according to claim 1, wherein the transaction authentication number is generated in an authentication module (2) associated with the communication terminal (1) as a cryptogram by encrypting the data set, the personal identification code, and at least one nonce, using a public key; wherein the method further comprises determining in the server (4) a received data set and a received personal identification code by decrypting the cryptogram, using a private key; and wherein the transaction authentication number is verified in the server (4) based on a comparison of the received data set with a data set generated in the server (4) from the secure session establishment protocol messages exchanged, and on a comparison of the received personal identification code with a personal identification code stored in the server (4).

**10.** The method according to claim 9, wherein the method further comprises generating a lookup index from the data set, and determining in a code table a selected code using the lookup index; wherein the selected code is used in generating the cryptogram; wherein the server (4) determines a received selected code from the cryptogram, using the private key; and wherein verifying the transaction authentication number includes comparing the received selected code with a selected code determined by the server (4) from a code table stored in the server (4).

**11.** The method according to claim 10, wherein the server (4) keeps track of selected codes used by the communication terminal (1); and wherein, for cases where the server (4) determines that a selected code was previously used by the communication terminal (1), the server (4) re-initiates session establishment with the communication terminal (1).

**12.** The method according to claim 1, wherein the transaction authentication number and a user identifier are transmitted from the communication terminal (1) to the server (4); and wherein the transaction authentication number is verified in the server (4) using the personal identification code assigned to the user identifier.

**13.** The method according to claim 12, wherein the personal identification code is received together with a biometric identifier from the user; and wherein the transaction authentication number is verified in the server (4) using a biometric identifier stored in the server (4).

**14.** The method according to claim 1, wherein the method further comprises generating in an authentication module (2) associated with the communication terminal (1) a digital signature from the data set, using a private key of a key pair associated with the authentication module (2); transmitting the digital signature from the communication terminal (1) to the server (4); and verifying in the server (4) the digital signature using a public key of the key pair.

**15.** The method according to claim 2, wherein the authentication base number is generated in an authentication module (2) associated with the communication terminal (1) from the data set, using a secret token key associated with the authentication module (2); and wherein the authentication base number is generated in the server (4) from the secure session establishment protocol messages exchanged, using the secret token key.

**16.** The method according to claim 15, wherein the data set is transferred from the communication terminal (1) to the authentication module (2) through a device interface, connecting the authentication module (2) to the communication terminal (1); and wherein the secret token is stored in the authentication module (2).

**17.** The method according to claim 16, wherein a token identifier is transmitted from the communication terminal (1) to the server (4) together with the transaction authentication number; and wherein the secret token key is determined in the server (4) based on the token identifier.

**18.** The method according to claim 17, wherein a master key is stored in the server (4); and wherein the secret token key is generated in the server (4) from the token identifier using the master key for encrypting the token identifier.

**19.** The method according to claim 15, wherein the user selects one of multiple possible institution scopes for the authentication module (2); wherein the institution scope selected by the user makes the authentication module (2) use one institution-specific secret token key of a set of multiple secret token keys for generating the authentication base number; wherein the server (4) is associated with a specific institution and uses the institution-specific secret token key for generating the authentication base number; and wherein the server (4) uses an institution-specific personal identification code for verifying the transaction authentication number.

**20.** The method according to claim 2, wherein the authentication base number is displayed by an authentication module (2) associated with the communication terminal (1); and wherein the transaction authentication number, generated by the user from the personal identification code and the authentication base number displayed by the authentication module (2), is received in the communication terminal (1) from the user.

**21.** The method according to claim 1, wherein after successful verification of the transaction authentication number in the server (4), a server authentication code is generated in the server (4) from the data set, applying a public function to the data set and using a secret token key for encryption; wherein the server authentication code is transmitted from the server (4) to the communication terminal (1); wherein the server authentication code received from the server (4) is displayed by the communication terminal (1); wherein a server authentication code is generated in an authentication module (2) associated with the communication terminal (1) from the data set, applying the public function to the data set and using the secret token key for encryption; and wherein the server authentication code generated in the authentication module (2) is displayed by the authentication module (2) for visual verification with the server authentication code displayed by the communication terminal (1).

**22.** A computer program product comprising computer program code means for controlling one or more processors of a communication terminal (1), which is configured to access a server (4) via a telecommunications network (3) through a secure session established with a secure session establishment protocol, such that the communication terminal (1)
receives from a user a personal identification code;
generates a data set from secure session establishment protocol messages exchanged between the communication terminal (1) and the server (4);
generates a transaction authentication number based on the data set, using the personal identification code; and transmits the transaction authentication number to the server (4) for verification.

**23.** The computer program product according to claim 22, comprising further computer program code means for controlling the processors such that the communication terminal (1) generates an authentication base number from the data set; and generates the transaction authentication number from the authentication base number, using the personal identification code.

**24.** The computer program product according to claim 23, comprising further computer program code means for controlling the processors such that the communication terminal (1) generates a random number; selects from the data set selected digits, the digits being determined by digits of the random number; and composes the authentication base number from the selected digits and the digits of the random number.

**25.** The computer program product according to claim 22, comprising further computer program code means for controlling the processors such that the communication terminal (1) generates the transaction authentication number as a keyed cryptographic digest value from the personal identification code and from secure the session establishment protocol messages exchanged between the communication terminal (1) and the server (4), using as a key a secret shared with the server (4).

**26.** The computer program product according to claim 25, comprising further computer program code means for controlling the processors such that the communication terminal (1) uses as the key one of the personal identification code and a secret token key.

**27.** The computer program product according to claim 25, comprising further computer program code means for controlling the processors such that the communication terminal (1) performs generating a lookup index from the data set; determines in a code table a selected code using the lookup index; and uses the selected code as the key.

**28.** The computer program product according to claim 22, comprising further computer program code means for controlling the processors such that the communication terminal (1) generates the transaction authentication number as a cryptogram by encrypting the data set, the personal identification code, and at least one nonce, using a public key.

**29.** The computer program product according to claim 28, comprising further computer program code means for controlling the processors such that the communication terminal (1) performs generating a lookup index from the data set; determines in a code table a selected code using the lookup index; and uses the selected code in generating the cryptogram.

**30.** The computer program product according to claim 22, comprising further computer program code means for controlling the processors such that the communication terminal (1) receives a biometric identifier from the user through a sensor of the communication terminal (1), and that the communication terminal (1) uses the biometric identifier as the personal identification code.

**31.** The computer program product according to claim 23, comprising further computer program code means for controlling the processors such that the communication terminal (1) receives instructions for selecting one of multiple possible institution scopes, and that the communication terminal (1) uses one institution-specific secret token key of a set of multiple secret token keys for generating the authentication base number.

**32.** The computer program product according to claim 22, comprising further computer program code means for controlling the processors such that the communication terminal (1) receives from the server (4) a server authentication code, that the communication terminal (1) generates a server authentication code from the data set, applying a public function to the data set and using the secret token key for encryption, and that the communication terminal (1) verifies the server authentication code received from the server (4) based on the server authentication code generated by the communication terminal (1).

**33.** A computerized server (4), configured for exchanging data with a communication terminal (1) via a telecommunications network (3), the server (4) comprising a user authentication module (40) for authenticating a user using the communication terminal (1) to access the server (4) via the telecommunications network (3) through a secure session established with a secure session establishment protocol, the user authentication module (40) being configured to receive a transaction authentication number from the communication terminal (1), the transaction authentication number being based on a personal identification code received from the user of the communication terminal (1) and on a data set generated from secure session establishment protocol messages exchanged between the communication terminal (1) and the server (4); and
to verify the transaction authentication number received based on the secure session establishment protocol messages exchanged with the communication terminal (1).

**34.** The server (4) according to claim 33, wherein the user authentication module (40) is configured to generate an authentication base number from the secure session establishment protocol messages exchanged, and to verify the transaction authentication number received using the authentication base number generated and the personal identification code.

**35.** The server (4) according to claim 34, wherein the user authentication module (40) is configured to generate the authentication base number by generating a random number, by selecting from the data set selected digits, the digits being determined by digits of the random number, and by composing the authentication base number from the selected digits and the digits of the random number.

36. The server (4) according to claim 33, wherein the user authentication module (40) is configured to generate a transaction authentication number as a keyed cryptographic digest value from the personal identification code and from the secure session establishment protocol messages exchanged between the communication terminal (1) and the server (4), using a personal identification code stored in the server (4) and using as a key a secret shared with the communication terminal (1); and to verify the transaction authentication number received based on a comparison of the transaction authentication number received and the keyed cryptographic digest value generated in the server (4).

37. The server (4) according to claim 36, wherein the user authentication module (40) is configured, for generating the keyed cryptographic digest value, to use as the key one of the personal identification code and a secret token key associated with user.

38. The server (4) according to claim 36, wherein the user authentication module (40) is configured, for generating the keyed cryptographic digest value, to use as the key a selected code from a code table stored in the server (4).

39. The server (4) according to claim 33, wherein the user authentication module (40) is configured to generate a transaction authentication number as a cryptogram by encrypting the data set, the personal identification code, and at least one nonce, using a public key; to determine a received data set and a received personal identification code by decrypting a cryptogram received from the communication terminal (1), using a private key; and to verify the transaction authentication number received based on a comparison of the received data set with a data set generated in the server (4) from the secure session establishment protocol messages exchanged, and on a comparison of the received personal identification code with a personal identification code stored in the server (4).

40. The server (4) according to claim 39, wherein the user authentication module (40) is configured to determine a received selected code from the cryptogram received from the communication terminal (1), using the private key; and to compare the received selected code with a selected code determined from a code table stored in the server (4) when verifying the transaction authentication number.

41. The server (4) according to one of claims 38 or 40, wherein the user authentication module (40) is configured to keep track of selected codes used for the communication terminal (1), and, for cases where a selected code was previously used by the communication terminal (1), to re-initiate session establishment with the communication terminal (1).

42. The server (4) according to claim 33, wherein the user authentication module (40) is configured to receive a personal identification code including a biometric identifier of the user; and to verify the transaction authentication number using a biometric identifier stored in the server (4).

43. The server (4) according to claim 34, wherein the user authentication module (40) is configured to generate the authentication base number from the secure session establishment protocol messages exchanged, using a secret token key.

44. The server (4) according to claim 43, wherein the user authentication module (40) is configured to receive with the transaction authentication number a token identifier from the communication terminal (1), and to determine the secret token key based on the token identifier.

45. The server (4) according to claim 43, wherein the server (4) further comprises a stored master key, and wherein the user authentication module (40) is configured to generate the secret token key from the token identifier using the master key for encrypting the token identifier.

46. The server (4) according to claim 33, wherein the user authentication module (40) is configured to generate a server authentication code from the data set, after successful verification of the transaction authentication number, applying a public function to the data set and using the secret token key for encryption, and to transmit the server authentication code to the communication terminal (1).

**Patentansprüche**

1. Ein Methode zur Authentifikation eines Benutzers mittels eines Kommumkationsendgeräts (1) um auf einen Server (4) via ein Telekommunikationsnetzwerk (3) durch eine sichere Session erstellt mit einem sicheren Session-Erstellungsprotokoll zuzugreifen, die Methode enthaltend:

   den Empfang eines persönlichen Identifikations-Codes vom Benutzer;
   die Erstellung einer Datenmenge aufgrund von sicheren Session-Erstellungsprotokoll Meldungen ausgetauscht zwischen dem Kommunikationsendgerät (1) und dem Server (4);
   die Erstellung einer Transaktions-Authentifikationsnummer basierend auf der Datenmenge, den persönlichen Identifikations-Code benutzend;
   die Übermittlung der Transaktions-Authentifikationsnummer vom Kommunikationsendgerät (1) zum Server (4); und
   die Verifikation der Transaktions-Authentifikationsnummer im Server (4) basierend auf den sicheren Session-Erstellungsprotokoll Meldungen ausgetauscht mit dem Kommunikationsendgerät (1).

2. Die Methode gemäss Anspruch 1, wobei die Methode zudem die Erzeugung einer Authentifikations-Basisnummer in einem Authentifikationsmodul (2) assoziiert mit dem Kommunikationsendgerät (1) aus der Datenmenge umfasst; wobei die Transaktions-Authentifikationsnummer aus der Authentifikations-Basisnummer erzeugt wird, den persönlichen Identifikations-Code benutzend; wobei die Methode zudem die Erzeugung einer Authentifikations-Basisnummer aus den ausgetauschten, sicheren Session-Erstellungsprotokoll meldungen im Server (4) umfasst; und wobei die Transaktions-Authentifikationsnummer im Server (4) die im Server (4) erzeugte Authentifikations-Basisnummer verwendend verifiziert wird.

3. Die Methode gemäss Anspruch 2, wobei die Methode zudem die Eingabe der Authentifikations-Basisnummer und des persönlichen Identifikations-Codes in ein Challenge/Response Gerät umfasst, das nicht mit dem Kommunikationsendgerät (1) verbunden ist; wobei die Transaktions-Authentifikationsnummer im Challenge/Response Gerät erzeugt wird als ein Geräte-Antwort-Wert basierend auf der Authentifikations-Basisnummer und dem persönlichen Identifikations-Code; und wobei die Methode zudem die Eingabe der Transaktions-Authentifikationsnummer ins Kommunikationsendgerät (1) umfasst, vor der Übermittlung der Transaktions-Authentifikationsnummer zum Server (4).

4. Die methode gemäss einem der Ansprüche 2 oder 3, wobei die Erzeugung der Authentifikations-Basisnummer aus der Datenmenge die Erzeugung einer Zufallszahl umfasst, aus der Datenmenge ausgewählte Zeichen wählend, wobei diese Zeichen durch Zeichen der Zufallszahl bestimmt werden, sowie die Authentifikations-Basisnummer aus den gewählter Zeichen und den Zeichen der Zufallszahl erstellt wird.

5. Die Methode gemäss Anspruch 1, wobei die Transaktions-Authentifikationsnumner in einem Authentifikationsmodul (2) assoziiert mit dem Kommunikationsendgerät (1) als ein Keyed Cryptographic Digest Wert vom persönlichen Identifikations-Code und von den zwischen dem Kommunikationsendgeräf (1) und dem Server (4) ausgetauschten sicheren Session-Erstellungsprotokoll Meldungen erzeugt wird, als den Schlüssel ein mit dem Server (4) geteiltes Geheimnis verwendend; wobei die Methode zudem im Server (4) die Erzeugung eines Keyed Cryptographic Digest Wert umfasst, den im Server (4) gespeicherten, persönlichen Identifikations-Code verwendend; und wobei die Transaktions-Authentifikationsnummer im Server (4) verifiziert wird, basierend auf einem Vergleich des Keyed Cryptographic Digest Wertes erhalten vorn. Kommunikationsendgerät (1) und dem keyed Cryptographic Digest Wert erzeugt im Server (4).

6. Die Methode gemäß Anspruch 5, als den Schlüssel Eins aus dem persönlichen Identifikations-Code und einem geheimen Geräteschlüssel assoziiert, mit dem Authentifikationsmodul (2) verwendend.

7. Die Methode gemäss Anspruch 5, wobei die Methode, zudem die Erzeugung eines Nachschlage-Indexes aus der Datenmenge umfasst; wobei die Methode zudem die Bestimmung eines gewählten Codes in einer Code Tabelle mittels des Nachschlage-Indexes umfasst; wobei der gewählte Code als Schlüssel verwendet wird; und wobei der Server (4) den Keyed Cryptographic Digest Wert erzeugt als Schüssel einen gewählten Code aus einer im Server (4) gespeicherten Code Tabelle verwendend.

8. Die Methode gemäss Anspruch 7, wobei der Server (4) über die durch das Kommunikationsendgerät (1) verwendeten, gewählten Codes Buch führt; und wobei, für Fälle, in denen der Server (4) feststellt, dass ein gewählter Code bereits früher durch das Kommunikationsendgerät (1) verwendet wurde, der Server (4) die Session-Erstellung mit Kommunikationsendgerät (1) re-initialisiert.

9. Die Methode gemäss Anspruch 1, wobei die Transaktions-Authentifikationsnummer in einem Authentifikationsmodul (2) assoziiert mit dem Kommunikationsendgerät (1) als Kryptogramm durch die Verschlüsselung der Datenmenge, des persönlichen Identifikationscodes, und mindestens einer Nonce einen öffentlichen Schlüssel verwendend erzeugt wird; wobei die Methode zudem die Determinierung einer erhaltenden Datenmenge und einem erhaltenen persönlichen Identifikations-Code durch die Entschlüsselung des Kryptogramms im Server (4), mittels eines privaten Schlüssels umfasst; und wobei die Transaktions-Authentifikationsnummer im Server (4) basierend auf einem Vergleich der erhaltenen Datenmenge mit einer im Server (4) aus den ausgetauschten Meldungen des sicheren Session-Erstellungsprotokolles erzeugten Datenmenge verifiziert wird, und einem Vergleich des erhaltenen persönlichen Identifikations-Code mit einem im Server (4) gespeicherten, persönlichen Identifikations-Code.

10. Die Methode gemäss Anspruch 9, wobei die Methode zudem die Erzeugung eines Nachschlage-Indexes aus der Datenmenge umfasst, und zudem die Bestimmung eines gewählten Codes in einer Code Tabelle mittels des Nachschlage-Indexes umfasst; wobei der gewählte Code zur Erzeugung eines Kryptogramms verwendet wird; wobei der Server (4) einen erhaltenen gewählten Code aus dem Kryptogramm bestimmt, den privaten Schlüssel verwendend; und die Transaktions-Authentifikationsnummer durch den Server (4) bestimmt wird inklusive dem Vergleich des erhaltenen gewählten Codes mit einem gewählten Code bestimmt aus einer im Server, (4) gespeicherten Code Tabelle.

11. Die Methode gemäss Anspruch 10, wobei der Server (4) über durch das Kommunikationsendgerät (1) verwendete, gewählt Codes Buch führt; und im Fall dass der Server (4) feststellt, dass ein gewählter Code durch das Kommunikationsendgerät (1) bereits früher verwendet wurde, der Server (4) Session-Erstellung mit dem Kommunikationsendgerät (1) re-initialisiert.

12. Die Methode gemäss Anspruch 1, wobei die Transaktions-Authentifikationsnummer und ein Benutzer-Identifikator vom Kommunikationsendgerät (1) zum Server (4) übermittelt werden; und wobei die Transaktions-Authentifikationsnummer im Server (4) mittels dem dem Benutzer-Identifikator zugewiesenen, persönlichen Identifikations-Code verifiziert wird.

13. Die Methode gemäss Anspruch 12, wobei der persönliche Identifikations-Code zusammen mit einem biometrischen Identifikator vom Benutzer erhalten wird; und wobei die Transaktions-Authentifikationsnummer im Server (4) mittels einem im Server (4) gespeicherten biometrischen Identifikators verifiziert wird.

14. Die Methode gemäss Anspruch 1, wobei die Methode zudem in einem Authentifikationsmodul (2) assoziiert mit dem Kommunikationsendgerät (1) die Erzeugung einer digitalen Unterschrift der Datenmenge, einen privaten Schlüssel aus einem Schlüsselpaar assoziiert mit dem Authentifikationsmodul (2) verwendend umfasst; weiter die Übermittlung der digitalen Unterschrift vom Kommunikationsendgerät (1) zum Server (4); und im Server (4) die Verifikation der digitalen Unterschrift den öffentlichen Schlüssel des Schlüssel-Paares verwendend.

15. Die Methode gemäss Anspruch 2, wobei die Authentifikations-Basisnummer in einem Authentifikationsmodul (2) assoziiert mit dem Kommunikationsendgerät (1) aus der Datenmenge erzeugt wird, einen geheimen Schlüssel eines Gerätes assoziiert mit dem Authentifikationsmodul (2) verwendend; und wobei die Authentifikations-Basisnummer im Server (4) aus den ausgetauschten Meldungen des sicheren Session-Erstellungsprotokolles, den geheimen Geräteschlüssel verwendend, erzeugt wird.

16. Die Methode gemäss Anspruch 15, wobei die Datenmenge vom Kormmunikationsendgerät (1) zum Authentifikationsmodul (2) durch eine Geräteschnittstelle, die das Authentifikationsmodul (2) mit dem Kommunikationsendgerät (1) verbindet, übermittelt wird; und wobei der geheime Token im Authentifikationsmodul (2) gespeichert wird.

17. Die Methode gemäss Anspruch 16, wobei ein Geräte-Identifikator vom Kommunikationsendgerät (1) zum Server (4) zusammen mit der Transaktions-Authentifikationsnummer übermittelt wird; und wobei der geheime Geräteschlüssel im Server (4) basierend auf dem Geräte-Identifikator bestimmt wird.

18. Die Methode gemäss Anspruch 17, wobei ein Hauptschlüssel im Server (4) gespeichert wird; und wobei der geheime Geräteschlüssel im Server (4) aus dem Geräte-Identifikator den Hauptschlüssel zur Verschlüsselung des Geräte-Identifikator verwendend, erzeugt wird.

**19.** Die Methode gemäss Anspruch 15, wobei der Benutzer einen von mehreren möglichen Institutionsgeltungsbereichen für das Authentifikationsmodul (2) auswählt; wobei der durch den Benutzer gewählte Institutionsgeltungsbereich das Authentifikationsmodul (2) dazu bringt, einen institutionsspezifischen, geheimen aus einer Menge von mehreren geheimen Geräteschlüsseln zur Erzeugung der Authentifikations-Basisnummer zu verwenden; wobei der Server (4) mit einer spezifischen Institution assoziiert ist und den institutionsspezifischen geheimen Geräteschlüssel für die Erzeugung der Authentifikations-Rasisnummer einsetzt; und wobei der Server (4) einen institutionsspezifischen, persönlichen Identifikations-Code für die Verifikation der Transaktions-Authentifikationsnummer Verwendet.

**20.** Die Methode gemäss Anspruch 2, wobei die Authentifikations-Basisnummer durch ein Authentifikationsmodul (2) assoziiert mit dem Kommunikationsendgerät (1) anzeigt; und wobei die Transaktions-Authentifikationsnummer, durch den Benutzer mit dem persönlichen Identifikations-Code und der Authentifikations-Basisnummer angezeigt durch das Authentifikationsmodul (2) erzeugt, im Kommunikationsendgerät (1) vom Benutzer erhalten wird.

**21.** Die Methode gemäss Anspruch 1, wobei nach der erfolgreiche Verifikation der Transaktions-Authentifikationsnummer im Server (4), ein Server-Authentifikationscode im Server (4) erzeugt wird aus einer Datenmenge durch die Anwendung einer öffentlichen Funktion über die Datenmenge und einen geheimen Geräteschlüssel für die Verschlüsselung verwendend; wobei der Server-Authentifikationscode vom Server (4) zum Kommunikationsendgerät (1) übermittelt wird; wobei der Server-Authentifikationscode erhalten vom Server (4) durch das Kommunikationsendgerät (1) angezeigt wird; wobei ein Server-Authentifikationscode in einem Authentifikationsmodul (2) assoziiert mit dem Kommunikationsendgerät (1) aus der Datenmenge, öffentlichen Funktion über die Datenmenge anwendend und geheimen Geräteschlüssel für die Verschlüsselung verwendend erzeugt wird; und wobei der im Authentifikationsmodul (2) erzeugte Server-Authentifikationscode durch das Authentifikationsmodul (2) angezeigt wird für visuelle Verifikation mit dem durch Kommunikationsendgerät (1) angezeigten Server-Authentifikationscode.

**22.** Ein Computer Programm Produkt umfassend Computer Program Code Mittel zur Kontrolle eines oder mehrerer Prozessoren eines Kommunikationsendgerät (1), das für den Zugriff auf einen Server (4) via ein Telekommunikationsnetzwerk (3) eine sichere Session erstellt mit einem sicheren Session-Erstellungsprotokoll konfiguriert ist, so dass das Kommunikationsendgerät (1)

vom Benutzer einen persönlichen Identifikations-Code empfängt;

eine Datenmenge aus den zwischen einem Kommunikationsendgerät (1) und den. Server (4) ausgetauschten Meldungen eines sicheren Session-Erstellungsprotokolls erzeugt;

eine Transaktions-Authentifikationsnummer basierend auf der Datenmenge, den persönlichen Identifikations-Code verwendend erzeugt; und

die Transaktions-Authentifikationsnummer für die Verifikation zum Server (4) übermittelt.

**23.** Das Computer Programm Produkt gemäss Anspruch 22, umfassend weitere Computer Program Code Mittel zur Kontrolle der Prozessoren so dass das Kommunikationsendgerät (1) eine Authentifikations-Basisnummer aus der Datenmenge erzeugt; und die Transaktions-Authentifikationsnummer aus der Authentifikations-Basisnummer, den persönlichen Identifikations-Code verwendend erzeugt.

**24.** Das Computer Programm Produkt gemäss Anspruch 23, umfassend weitere Computer Program Code. Mittel zur Kontrolle der Prozessoren so dass das Kommunikationsendgerät (1) eine Zufallszahl erzeugt; aus der Datenmenge ausgewählte Zeichen bestimmt, die Zeichen durch die Zeichen der Zufallszahl bestimmt; und eine Authentifikations-Basisnummer aus den ausgewählte Zeichen und den Zeichen der Zufallszahl erstellt.

**25.** Das Computer Programm Produkt gemäss Anspruch 22, umfassend weitere Computer Program Code Mittel zur Kontrolle der Prozessoren so dass das Kommunikationsendgerät (1) eine Transaktions-Authentifikationsnummer als ein Keyed Cryptographic Digest Wert vom persönlichen Identifikations-Code und von den zwischen dem Kommunikationsendgerät (1) und dem Server (4) ausgetauschten sicheren Session-Erstellungsprotokoll Meldungen erzeugt, als den Schlüssel ein mit dem Server (4) geteiltes Geheimnis verwendend.

**26.** Das Computer Programm Produkt gemäss Anspruch 25, umfassend weitere Computer Program Code Mittel zur Kontrolle der Prozessoren so dass das Kommunikationsendgerät (1) benützend als Schüssel eines aus persönlichem Identifikations-Code und einem geheimen Geräteschlüssel.

**27.** Das Computer Programm Produkt gemäss Anspruch 25, umfassend weitere Computer Program Code Mittel zur Kontrolle der Prozessoren so dass das Kommunikationsendgerät (1) einen Nachschlage-Index aus der Datenmenge erzeugt; einen gewählten Code in einer Code Tabelle mittel des Nachschlage-Indexes bestimmt; und gewählten Code als den Schlüssel verwendet.

28. Das Computer Programm Produkt gemäss Anspruch 22, umfassend weitere Computer Program Code Mittel zur Kontrolle der Prozessoren so dass das Kommunikationsendgerät (1) die Transaktions-Authentifikationsnummer als ein Kryptogramm durch die Verschlüsselung der Datenmenge, des persönlichen Identifikationscodes, und mindestens einer Nonce einen öffentlichen Schlüssel verwendend erzeugt.

29. Das Computer Programm Produkt gemäss Anspruch 28, umfassend weitere Computer Program Code Mittel zur Kontrolle der Prozessoren so dass das Komnunikationsendgerät (1) einen Nachschlage-Index aus der Datenmenge erzeugt; einen gewählten Code in einer Code Tabelle mittels des Nachschlage-Indexes bestimmt; und gewählten Code für die Erzeugung des Kryptogramms verwendet.

30. Das Computer Programm Produkt gemäss Anspruch 22, umfassend weitere Computer Program Code Mittel zur Kontrolle der Prozessoren so dass das Kommunikationsendgerät (1) einen biometrischen Identifikator vom Benutzer durch einen Sensor des Kommunikationsendgeräts (1) erhalt, und dass das Kommunikationsendgerät (1) den biometrischen Identifikator als persönlichen Identifikations-Code verwendet.

31. Das Computer Programm Produkt gemäss Anspruch 23, umfassend weitere Computer Program Code Mittel zur Kontrolle der Prozessoren so dass das Kommunikationsendgerät (1) Auswahlinstruktionen um einen mehreren möglichen Institutionsgeltungsbereichen zu wählen, und dass das Kommunikationsendgerät (1) einen aus einer Vielzahl von institutionsspezifischen geheimen Geräteschlüsseln benützt um die Authentifikations-Basisnummer zu erzeugten.

32. Das Computer Programm Produkt gemäss Anspruch 22, umfassend weitere Computer Program Code Mittel zur Kontrolle der Prozessoren so dass das Kommunikationsendgerät (1) vom Server (4) einen Server-Authentifikationscode erhält, dass das Kommunikationsendgerät (1) einen Server-Authentifikationscode aus einer Datenmenge durch die Anwendung einer öffentlichen Funktion über die Datenmenge und einen geheimen Geräteschlüssel für die Verschlüsselung verwendend erzeugt, und dass das Kommunikationsendgerät (1) den Server-Authentifikationscode erhalten vom Server (4) basierend auf dem durch Kommunikationsendgerät (1) erzeugten Server-Authentifikationscode verifiziert.

33. Ein computerisierter Server (4), konfiguriert um Daten mit einem Kommunikationsendgerät (1) via ein Telekommunikationsnetzwerk (3) auszutauschen, der Server (4) umfassend ein Benutzerauthentifikationsmodul (40) zur Authentifikation eines Benutzers ein Kommunikationsendgerät (1) für den Zugriff zu einem Server (4) via the Telekommunikationsnetzwerk (3) durch eine sichere Session erstellt mittels eines sicheren Session-Erstellungsprotokoll verwenden, das Benutzerauthentifikationsmodul (40) konfiguriert um
eine Transaktions-Authentifikationsnummer vom Kommunikationsendgerät, (1) zu empfangen, die Transaktions-Authentifikationsnummer basierend auf einem persönlichen Identifikations-Code erhalten vom Benutzer des Kommunikationsendgeräts (1) und auf einer Datenmenge erzeugt aus Meldungen ausgetauscht zwischen dem Kommunikationsendgerät (1) und dem Server (4) im sicheren Session-Erstellungsprotokoll; und
die Transaktions-Authentifikationsnummer erhalten basierend auf den Meldungen ausgetauscht mit t dem Kommunikationsendgerät (1) im sicheren Session-Erstellungsprotokoll zu verifizieren.

34. Der Server (4) gemäss Anspruch 33, wobei das Benutzerauthentifikationsmodul (40) konfiguriert ist um eine Authentifikations-Basisnummer auf ausgetauschten sicheren Session-Erstellungsprotokoll Meldungen zu erstellen, und die erhaltene Transaktions-Äuthentifikationsnummer mittels der erzeugten Authentifikations-Basisnummer und des persönlichen Identifikationscodes zu verifizieren.

35. Der Server (4) gemäss Anspruch 34, wobei das Benutzerauthentifikationsmodul (40) konfiguriert ist um durch Erzeugung einer Zufallszahl, aus der Datenmenge ausgewählte Zeichen wählend, wobei diese Zeichen durch Zeichen Zufallszahl bestimmt werden eine Authentifikations-Basisnummer zu erzeugen, wobei die Authentifikations-Basisnummer auf den gewählten Zeichen und den Zeichen der Zufallszahl erstellen wird.

36. Der Server (4) gemäss Anspruch 33, wobei das Benutzerauthentifikationsmodul (40) konfiguriert ist um eine Transaktions-Authentifikationsnummer als ein . Keyed Cryptographic Digest Wert vom persönlichen Identifikations-Code und von den zwischen dem Kommunikationsendgerät (1) und dem Server (4) ausgetauschten sicheren Session-Erstellungsprotokoll Meldungen erzeugt, zu erzeugen, einen persönlichen Identifikations-Code gespeichert im Server (4) verwendend und als den Schlüssel ein mit dem Kommunikationsendgerät (1) geteiltes Geheimnis verwendend; um die erhaltene Transaktions-Authentifikationsnummer basierend auf einem Vergleich der erhaltenen Transaktions-Authentifikationsnummer und dem im Server (4) erzeugten Keyed Cryptographic Digest Wert zu verifizieren.

37. Der Server (4) gemäss Anspruch 36, wobei das Benutzerauthentifikationsmodul (40) konfiguriert ist um einen Keyed Cryptographic Digest Wert zu erzeugen, als Schlüssel einen der persönlichen Identifikations-Codes und einen geheimen, Geräteschlüssel assoziiert mit dem Benutzer verwendend.

38. Der Server (4) gemäss Anspruch 36, wobei das Benutzerauthentifikationsmodul (40) konfiguriert ist um einen Keyed Cryptographic Digest Wert zu erzeugen, als Schlüssel einen ausgewählten Code aus einer im Server (4) gespeicherten Code Tabelle verwendend.

39. Der Server (4) gemäss Anspruch 33, wobei das Benutzerauthentifikationsmodul (40) konfiguriert ist um eine Transaktions-Authentifikationsnummer als Kryptogramm durch die Verschlüsselung der Datenmenge, des persönlichen Identifikationscodes, und mindestens einer Nonce einen öffentliche Schlüssel verwendend zu erzeugen; um eine erhaltenen Datenmenge und einen erhaltenen persönlichen Identifikations-Code durch die Entschlüsselung des Kryptogramms im Kommunikationsendgerät (1) einen privaten Schlüssel verwendend zu bestimmen; und die erhaltene Transaktions-Authentifikationsnummer basierend auf einem Vergleich der erhaltenen Datenmenge mit einer im Server (4) aus den ausgetauschten Meldungen des sicheren Session-Erstellungsprotokolles erzeugten Datenmenge zu verifizieren, und einem Vergleich des erhaltenen persönlichen Identifikations-Codes mit einem im Server (4) gespeicherten, persönlichen Identifikations-Code.

40. Der Server (4) gemäss Anspruch 39, wobei das Benutzerauthentifikationsmodul (40) konfiguriert ist um einen vom Kommunikationsendgerät (1) erhaltenen gewählten Code aus dem Kryptogramm zu bestimmen, den privaten Schüssel verwendend; und um den erhaltenen gewählter Code mit einem gewählten Code durch eine im Server (4) gespeicherte Code bestimmt zu vergleichen wenn Transaktions-Authentifikationsnummer verifiziert wird.

41. Der Server (4) gemäss einem der Ansprüche 38 oder 40, wobei das Benutzerauthentifikationsmodul (40) konfiguriert ist um über die für das Kommunikationsendgerät (1) verwendeten gewählten Codes Buch zu führen, und, falls ein gewählter Codes bereits durch das Kommunikationsendgerät (1) verwendet wurde, die Session-Erstellung mit dem Kommunikationsendgerät (1) zu re-initialisieren.

42. Der Server (4) gemäss Anspruch 33, wobei das Benutzerauthentifikationsmodul (40) konfiguriert ist um ein persönlichen Identifikations-Code einen biometrischen Identifikator des Benutzers enthaltend; und um die Transaktions-Authentifikationsnummer einen im Server (4) gespeicherten biometrischen Identifikator verwendend zu verifizieren.

43. Der Server (4) gemäss Anspruch 34, wobei das Benutzerauthentifikationsmodul (40) konfiguriert ist um die Authentifikations-Basisnummer von den ausgetauschten sicheren Session-Erstellungsprotokoll Meldungen zu erstellen, einen geheimen Geräteschlüssel verwendend.

44. Der Server (4) gemäss Anspruch 43, wobei das Benutzerauthentifikationsmudul (40) konfiguriert ist um mit der Transaktions-Authentifikationsnummer einen Geräte-Identifikator vom Kommunikationsendgerät (1) zu erhalten, und den geheimen Geräteschlüssel mit dem Geräte-Identifikator zu bestimmen.

45. Der Server (4) gemäss Anspruch 43, wobei der Server (4) zudem einen gespeicherten Masterschlüssel enthält, und wobei das Benutzerauthentifikationsmodul (40) konfiguriert ist um den geheimen Geräteschlüssel vom Geräte-Identifikator den Hauptschlüssel für das Verschlüsseln des Geräte-Identifikator verwendend zu erstellen.

46. Der Server (4) gemäss Anspruch 33, wobei das Benutzerauthentifikationsmodul (40) konfiguriert ist um einen Server-Authentifikationscode aus der Datenmenge zu erzeugen, nach der erfolgreichen Verifikation einer Transaktions-Authentifikationsnummer, durch die Anwendung einer öffentlichen Funktion über die Datenmenge und einen geheimen Geräteschlüssel für die Verschlüsselung verwendend; und um den Server-Authentifikationscode zum Kommunikationsendgerät (1) zu übermitteln.

**Revendications**

1. Procédé d'authentification d'un utilisateur utilisant un terminal de communication (1) pour accéder à un serveur (4) par l'intermédiaire d'un réseau de télécommunication (3) sur une session sécurisée établie avec un protocole d'établissement de session sécurisée, le protocole comprenant :

- la réception d'un code d'identification personnel en provenance de l'utilisateur ;
- la génération d'un ensemble de données à partir de messages de protocole d'établissement de session sécurisée échangés entre le terminal de communication (1) est le serveur (4) ;
- la génération d'un numéro d'authentification de transaction basé sur l'ensemble de données, en utilisant le code d'identification personnel ;
- la transmission du numéro d'authentification de transaction du terminal de communication (1) au serveur (4) ; et
- la vérification, dans le serveur (4), du numéro d'authentification de transaction sur la base des messages de protocole d'établissement de session sécurisée échangés avec le terminal de communication (1).

2. Procédé selon la revendication 1, dans lequel le procédé comprend en outre la génération, dans un module d'authentification (2) associé au terminal de communication (1), d'un numéro de base d'authentification à partir de l'ensemble de données ; le numéro d'authentification de transaction étant généré à partir du numéro de base d'authentification, en utilisant le code d'identification personnel ; le procédé comprenant en outre la génération, dans le serveur (4), d'un numéro de base d'authentification à partir des messages de protocole d'établissement de session sécurisée échangés ; et le numéro d'authentification de transaction étant vérifié dans le serveur (4), en utilisant le numéro de base d'authentification généré dans le serveur (4).

3. Procédé selon la revendication 2, dans lequel le procédé comprend en outre l'entrée du numéro de base d'authentification et du code d'identification personnel dans un dispositif jeton d'interrogation/réponse, non connecté au terminal de communication (1) ; le numéro d'authentification de transaction étant généré dans le dispositif jeton d'interrogation/réponse en tant que valeur de réponse de jeton sur la base du numéro de base d'authentification et du code d'identification personnel ; et le procédé comprenant en outre l'entrée du numéro d'authentification de transaction dans le terminal de communication (1), avant la transmission du numéro d'authentification de transaction au serveur (4).

4. Procédé selon l'une des revendications 2 ou 3, dans lequel la génération du numéro de base d'authentification à partir de l'ensemble de données comprend la génération d'un numéro aléatoire, la sélection, à partir de l'ensemble de données, de chiffres sélectionnés, les chiffres étant déterminés par des chiffres du numéro aléatoire, et la composition du numéro de base d'authentification à partir des chiffres sélectionnés et des chiffres du numéro aléatoire.

5. Procédé selon la revendication 1, dans lequel le numéro d'authentification de transaction est généré, dans un module d'authentification (2) associé au terminal de communication (1), sous la forme d'une valeur de condensé cryptographique à clé, à partir du code d'identification personnel et des messages de protocole d'établissement de session sécurisée échangés entre le terminal de communication et le serveur (4), en utilisant, comme clé, un secret partagé avec le serveur (4) ; le procédé comprenant en outre la génération, dans le serveur (4), d'une valeur de condensé cryptographique à clé en utilisant un code d'identification personnel stocké dans le serveur (4) ; et le numéro d'authentification de transaction étant vérifié dans le serveur (4) sur la base d'une comparaison de la valeur de condensé cryptographique à clé reçue en provenance du terminal de communication (1) et de la valeur de condensé cryptographique à clé généré dans le serveur (4).

6. Procédé selon la revendication 5, utilisant comme clé l'un du code d'identification personnel et d'une clé de jeton secret associée au module d'authentification (2).

7. Procédé selon la revendication 5, dans lequel le procédé comprend en outre la génération d'un index de recherche à partir de l'ensemble de donnée ; le procédé comprenant en outre la détermination, dans un tableau de code, d'un code sélectionné, en utilisant l'index de recherche ; le code sélectionné étant utilisé comme clé ; et le serveur (4) générant la valeur de condensé cryptographique à clé en utilisant comme clé un code sélectionné provenant d'un tableau de code stocké dans le serveur (4).

8. Procédé selon la revendication 7, dans lequel le serveur (4) suit les codes sélectionnés utilisés par le terminal de communication (1) ; et, pour les cas dans lesquels le serveur (4) détermine qu'un code sélectionné a été utilisé antérieurement par le terminal de communication (1), le serveur (4) réinitie l'établissement de la session avec le terminal de communication (1).

9. Procédé selon la revendication 1, dans lequel le numéro d'authentification de transaction est généré, dans un module d'authentification (2) associé au terminal de communication (1), sous la forme d'un cryptogramme par chiffrage de l'ensemble de données, du code d'identification personnel et d'au moins un nonce, en utilisant une clé publique ; le procédé comprenant en outre la détermination, dans le serveur (4), d'un ensemble de données reçu et d'un code d'identification personnel reçu par déchiffrage du cryptogramme, en utilisant une clé privée ; et le numéro d'authentification de transaction étant vérifiée dans le serveur (4) sur la base d'une comparaison de l'ensemble de données reçu avec un ensemble de données généré dans le serveur (4) à partir des messages de protocole d'établissement de session sécurisée échangés, et d'une comparaison du code d'identification personnel reçu avec un code d'identification personnel stocké dans le serveur (4).

**10.** Procédé selon la revendication 9, dans lequel le procédé comprend en outre la génération d'un index de recherche à partir de l'ensemble de données, et la détermination, dans un tableau de code, d'un code sélectionné, en utilisant l'index de recherche ; le code sélectionné étant utilisé dans la génération du cryptogramme ; le serveur (4) déterminant un code sélectionné reçu à partir du cryptogramme, en utilisant la clé privée ; et la vérification du numéro d'authentification de transaction comprenant la comparaison du code sélectionné reçu avec un code sélectionné déterminé par le serveur (4) à partir d'un tableau de code stocké dans le serveur (4).

**11.** Procédé selon la revendication 10, dans lequel le serveur (4) suit les codes sélectionnés utilisés par le terminal de communication (1) ; et, pour les cas dans lesquels le serveur (4) détermine qu'un code sélectionné a été utilisé antérieurement par le terminal de communication (1), le serveur (4) réinitie l'établissement de la session avec le terminal de communication (1).

**12.** Procédé selon la revendication 1, dans lequel le numéro d'authentification de transaction et un identifiant d'utilisateur sont transmis du terminal de communication (1) au serveur (4) ; et le numéro d'authentification de transaction étant vérifié dans le serveur (4) en utilisant le code d'identification personnel attribué à l'identifiant d'utilisateur.

**13.** Procédé selon la revendication 12, dans lequel le code d'identification personnel est reçu conjointement avec un identifiant biométrique de l'utilisateur ; et le numéro d'authentification de transaction étant vérifié dans le serveur (4) en utilisant un identifiant biométrique stocké dans le serveur (4).

**14.** Procédé selon la revendication 1, dans lequel le procédé comprend en outre la génération, dans un module d'authentification (2) associé au terminal de communication (1), d'une signature numérique à partir de l'ensemble de données, en utilisant une clé privée d'une paire de clés associée au module d'authentification (2) ; la transmission de la signature numérique du terminal de communication (1) au serveur (4) ; et la vérification, dans le serveur (4), de la signature numérique en utilisant une clé publique de la paire de clés.

**15.** Procédé selon la revendication 2, dans lequel le numéro de base d'authentification est généré, dans un module d'authentification (2) associé au terminal de communication (1), à partir de l'ensemble de données, en utilisant une clé de jeton secret associée au module d'authentification (2) ; et le numéro de base d'authentification étant généré dans le serveur (4) à partir des messages de protocole d'établissement de session échangés, en utilisant la clé de jeton secret.

**16.** Procédé selon la revendication 15, dans lequel l'ensemble de données est transféré du terminal de communication (1) au module d'authentification (2) par l'intermédiaire d'une interface de dispositif, connectant le module d'authentification (2) au terminal de communication (1) ; et le jeton secret étant stocké dans le module d'authentification (2).

**17.** Procédé selon la revendication 16, dans lequel un identifiant de jeton est transmis du terminal de communication (1) au serveur (4) conjointement avec le numéro d'authentification de transaction ; et la clé de jeton secret étant déterminée dans le serveur (4) sur la base de l'identifiant de jeton.

**18.** Procédé selon la revendication 17, dans lequel une clé maître est stockée dans le serveur (4) ; et la clé de jeton secret étant générée dans le serveur (4) à partir de l'identifiant de jeton en utilisant la clé maître pour chiffrer l'identifiant de jeton.

**19.** Procédé selon la revendication 15, dans lequel l'utilisateur sélectionne l'une de multiples portées d'institution possible pour le module d'authentification (2) ; la portée d'institution sélectionnée par l'utilisateur amenant le module d'authentification (2) à utiliser une clé de jeton secret spécifique à l'institution, d'un ensemble de multiples clés de jeton secret, pour générer le numéro de base d'authentification ; le serveur (4) étant associé à une institution spécifique et utilisant la clé de jeton secret spécifique à l'institution pour générer le numéro de base d'authentification ; et le serveur (4) utilisant un code d'identification personnel spécifique à l'institution pour vérifier le numéro d'authentification de transaction.

20. Procédé selon la revendication 2, dans lequel le numéro de base d'authentification est affiché par un module d'authentification (2) associé au terminal de communication (1) ; et le numéro d'authentification de transaction, généré par l'utilisateur à partir du code d'identification personnel et du numéro de base d'authentification affiché par le module d'authentification (2), étant reçu dans le terminal de communication (1) en provenance de l'utilisateur.

21. Procédé selon la revendication 1, dans lequel, après une vérification réussie du numéro d'authentification de transaction dans le serveur (4), un code d'authentification de serveur est généré dans le serveur (4) à partir de l'ensemble de données, en appliquant une fonction publique à l'ensemble de données et en utilisant une clé de jeton secret pour le chiffrage ; le code d'authentification de serveur étant transmis du serveur (4) au terminal de communication (1) ; le code d'authentification de serveur reçu en provenance du serveur (4) étant affiché par le terminal de communication (1) ; un code d'authentification de serveur étant généré, dans un module d'authentification (2) associé au terminal de communication (1), à partir de l'ensemble de données, en appliquant la fonction publique à l'ensemble de données et en utilisant la clé de jeton secret pour le chiffrage ; et le code d'authentification de serveur généré dans le module d'authentification (2) étant affiché par le module d'authentification (2) pour une vérification visuelle avec le code d'authentification de serveur affiché par le terminal de communication (1).

22. Produit programme d'ordinateur comprenant des moyens de code de programme d'ordinateur pour commander un ou plusieurs processeurs d'un terminal de communication (1), qui est configuré pour accéder à un serveur (4) par l'intermédiaire d'un réseau de télécommunication (3) sur une session sécurisée établie avec un protocole d'établissement de session sécurisée, de telle sorte que le terminal de communication (1) :

   - reçoit un code d'identification personnel en provenance d'un utilisateur ;
   - génère un ensemble de données à partir de messages de protocole d'établissement de session sécurisée échangés entre le terminal de communication (1) et le serveur (4) ;
   - génère un numéro d'authentification de base basé sur l'ensemble de données, en utilisant le code d'identification personnel ; et
   - transmet le numéro d'authentification de transaction au serveur (4) pour une vérification.

23. Produit programme d'ordinateur selon la revendication 2, comprenant en outre des moyens de code de programme d'ordinateur pour commander les processeurs de telle sorte que le terminal de communication (1) génère un numéro de base d'authentification à partir de l'ensemble de données ; et génère le numéro d'authentification de transaction à partir du numéro de base d'authentification, en utilisant le code d'identification personnel.

24. Produit programme d'ordinateur selon la revendication 23, comprenant en outre des moyens de code de programme d'ordinateur pour commander les processeurs de telle sorte que le terminal de communication (1) génère un numéro aléatoire ; sélectionne, à partir de l'ensemble de données, des chiffres sélectionnés, les chiffres étant déterminés par des chiffres du numéro aléatoire ; et compose le numéro de base d'authentification à partir des chiffres sélectionnés et des chiffres du numéro aléatoire.

25. Produit programme coordinateur selon la revendication 22, comprenant en outre des moyens de code de programme d'ordinateur pour commander les processeurs de telle sorte que le terminal de communication (1) génère le numéro d'authentification de transaction sous la forme d'une valeur de condensé cryptographique à clé à partir du code d'identification personnel et des messages de protocole d'établissement sécurisé échangés entre le terminal de communication (1) et le serveur (4), en utilisant comme clé un secret partagé avec le serveur (4).

26. Produit programme d'ordinateur selon la revendication 25, comprenant en outre des moyens de code de programme d'ordinateur pour commander les processeurs de telle sorte que le terminal de communication (1) utilise comme clé l'un du code d'identifiant personnel est d'une clé de jeton secret.

27. Produit programme d'ordinateur selon la revendication 25, comprenant en outre des moyens de code de procédé d'ordinateur pour commander les processeurs de telle sorte que le terminal de communication (1) réalise la génération d'un index de recherche à partir de l'ensemble de données ; détermine, dans un tableau de code, un code sélectionné, en utilisant l'index de recherche, et utilise le code sélectionné comme clé.

28. Produit programme d'ordinateur selon la revendication 22, comprenant en outre des moyens de code de programme d'ordinateur pour commander les processeurs de telle sorte que le terminal de communication (1) génère le numéro d'authentification de transaction sous la forme d'un cryptogramme par chiffrage de l'ensemble de données, du code d'identification personnel et d'au moins un nonce, en utilisant une clé publique.

29. Produit programme d'ordinateur selon à revendication 28, comprenant en outre des moyens de code de programme d'ordinateur pour commander les processeurs de telle sorte que le terminal de communication (1) réalise la génération d'un index de recherche à partir de l'ensemble de données ; détermine, dans un tableau de code, un code sélectionné, en utilisant l'index de recherche ; et utilise le code sélectionné dans la génération du cryptogramme.

30. Produit programme d'ordinateur selon la revendication 22, comprenant en outre des moyens de code de programme d'ordinateur pour commander les processeurs de telle sorte que le terminal de communication (1) reçoit un identifiant biométrique en provenance de l'utilisateur par l'intermédiaire d'un capteur du terminal de communication (1), et que le terminal de communication (1) utilise l'identifiant biométrique comme code d'identification personnel.

31. Produit programme d'ordinateur selon la revendication 23, comprenant en outre des moyens de code de programme d'ordinateur pour commander les processeurs de telle sorte que le terminal de communication (1) reçoit des instructions de sélection de l'une de multiples portées d'institution possible, et que le terminal de communication 11) utilise une clé de jeton secret spécifique à une institution, d'un ensemble des multiples clés de jeton secret, pour générer le numéro de base d'authentification.

32. Produit programme d'ordinateur selon la revendication 22, comprenant en outre des moyens de code de programme d'ordinateur pour commander les processeurs de telle sorte que le terminal de communication (1) reçoit, en provenance du serveur (4), un code d'authentification de serveur, que le terminal de communication (1) génère un code d'authentification de serveur à partir de l'ensemble de données, en appliquant une fonction publique à l'ensemble de données et en utilisant la clé de jeton secret pour le chiffrage, et que le terminal de communication (1) vérifie le code d'authentification de serveur reçu en provenance du serveur (4), sur la base du code d'authentification de serveur généré par le terminal due communication (1).

33. Serveur informatique (4), configuré pour échanger des données avec un terminal de communication (1) par l'intermédiaire d'un réseau de télécommunication (3), le serveur (4) comprenant un module d'authentification d'utilisateur (40) pour authentifier un utilisateur utilisant le terminal de communication (1) pour accéder au serveur (4) par l'intermédiaire du réseau de communication (3) sur une session sécurisée établie avec un protocole d'établissement de session sécurisée, le module d'authentification d'utilisateur (40) étant configuré :

- pour recevoir un numéro d'authentification de transaction en provenance du terminal de communication (1), le numéro d'authentification de transaction étant basé sur un code d'identification personnel reçu en provenance de l'utilisateur du terminal de communication (1) et sur un ensemble de données généré à partir de messages de protocole d'établissement de session sécurisée échangés entre le terminal de communication (1) et le serveur (4) ; et
- pour vérifier le numéro d'authentification de transaction reçu, sur la base des messages de protocole d'établissement de session sécurisée échangés avec le terminal de communication (1).

34. Serveur (4) selon la revendication 33, dans lequel le module d'authentification d'utilisateur (40) est configuré pour générer un numéro de base d'authentification à partir des messages de protocole d'établissement de session sécurisée échangées, et pour vérifier le numéro d'authentification de transaction reçu en utilisant le numéro de base d'authentification généré et le code d'identification personnel.

35. Serveur (4) selon la revendication 34, dans lequel le module d'authentification d'utilisateur (40) est configuré pour générer le numéro de base d'authentification par génération d'un numéro aléatoire, par sélection, à partir de l'ensemble de données, de chiffres sélectionnés, les chiffres étant déterminés par des chiffres du numéro aléatoire, et par composition du numéro de base d'authentification à partir des chiffres sélectionnés et des chiffres du numéro aléatoire.

36. Serveur (4) selon la revendication 33, dans lequel le module d'authentification d' utilisateur (40) est configuré pour générer un numéro d'authentification de transaction sous la forme d'une valeur de condensé cryptographique à clé à partir du code d'identification personnel et des messages de protocole d'établissement de session sécurisée échangés entre le terminal de communication (1) et le serveur (4), en utilisant un code d'identification personnel stocké dans le serveur (4) et en utilisant comme clé un secret partagé avec le terminal de communication (1) ; et pour vérifier le numéro d'authentification de transaction reçu, sur la base d'une comparaison du numéro d'authentification de transaction reçu et de la valeur de condensé cryptographique à clé générée dans le serveur (4).

37. Serveur (4) selon la revendication 36, dans lequel le module d'identification d'utilisateur (40) est configuré, pour à génération de la valeur de condensé cryptographique à clé, pour utiliser comme clé l'un du code d'identification personnel et d'une clé de jeton secret associée à l'utilisateur.

38. Serveur (4) selon la revendication 36, dans lequel le module d'authentification d'utilisateur (40) est configure, pour la génération de la valeur de condensé cryptographique à clé, pour utiliser comme clé un code sélectionné, à partir d'un tableau de code stocké dans le serveur (4).

39. Serveur (4) selon la revendication (33), dans lequel le module d'authentification d'utilisateur (40) est configuré pour générer un numéro d'authentification de transaction sous la forme d'un cryptogramme par chiffrage de l'ensemble de données, du code d'identification personnel et d'au moins un nonce, en utilisant une clé publique ; pour déterminer un ensemble de données reçu et un code d'identification personnel reçu par déchiffrage d'un cryptogramme reçu en provenance du terminal de communication (1), en utilisant une clé privée ; et pour vérifier le numéro d'authentification de transaction reçu, sur la base d'une comparaison de l'ensemble de données reçu avec un ensemble de donnée s généré dans le serveur (4) à partir des messages de protocole d'établissement de session sécurisée échangés, et d'une comparaison du code d'identification personnel reçu avec un code d'identification personnel stocké dans le serveur (4).

40. Serveur (4) selon la revendication 39, dans lequel le module d'authentification d'utilisateur (40) est configuré pour déterminer un code sélectionné reçu, à partir du cryptogramme reçu en provenance du terminal de communication (1), en utilisant la clé privée ; et pour comparer le code sélectionné reçu avec un code sélectionné déterminé à partir d'un tableau de code stocké dans le serveur (4) lors de la vérification du numéro d'authentification de transaction.

41. Serveur (4) selon l'une des revendications 38 ou 40, dans lequel le module d'authentification d'utilisateur (40) est configuré pour suivre les codes sélectionnés utilisés pour le terminal de communication (1) et, pour les cas dans lesquels un code sélectionné a été utilisé antérieurement par le terminal de communication (1), pour réinitier l'établissement de à session avec le terminal de communication (1).

42. Serveur (4) selon la revendication 33, dans lequel le module d'authentification d'utilisateur (40) est configuré pour recevoir un code d'identification personnel comprenant un identifiant biométrique de l'utilisateur ; et pour vérifier le numéro d'authentification de transaction en utilisant un identifiant biométrique stocké dans le serveur (4).

43. Serveur (4) selon la revendication 34, dans lequel le module d'authentification d'utilisateur (40) est configuré pour générer le numéro de base d'authentification à partir des messages de protocole d'établissement de session sécurisée échangés, en utilisant une clé de jeton secret.

44. Serveur (4) selon la revendication 43, dans lequel le module d'authentification d'utilisateur (40) est configuré pour recevoir, avec le numéro d'authentification de transaction, un identifiant de jeton, en provenance du terminal de communication (1), et pour déterminer la clé de jeton secret sur la base de identifiant de jeton.

45. Serveur (4) selon la revendication 43, dans lequel le serveur (4) comprend en outre une clé maître stockée, et le module d'authentification d'utilisateur (40) étant configuré pour générer la clé de jeton secret à partir de l'identifiant de jeton en utilisant la clé maître pour chiffrer l'identifiant de jeton.

46. Serveur (4) selon la revendication 33, dans lequel le module d'authentification d'utilisateur (40) est configuré pour générer un code d'authentification de serveur à partir de l'ensemble de données, après une vérification réussie du numéro d'authentification de transaction, en appliquant une fonction publique à l'ensemble de données et en utilisant la clé de jeton secret pour le chiffrage, et pour transmettre le code d'authentification de serveur au terminal de communication (1).

**Fig. 1**

**Fig. 2**

**Fig. 3**

**Fig. 4**

**Fig. 5**

**Fig. 6**

**Fig. 7**

2/20          1          4

S44
S45

S42          S41

S43

S46

**Fig. 8**

1/2          4

S44          S47

S42          S41

S43

S48

**Fig. 9**

**Fig. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5657390 A
- US 4405829 A
- US 4720860 A
- US 4885778 A
- US 4856062 A
- US 20040064687 A
- US 2002107798 A1
- US 4697072 A

**Non-patent literature cited in the description**

- **DIERKS, T. ; C. ALLEN.** The TLS Protocol Version 1.0. *Request for Comments 2246,* January 1999
- **KRAWCZYK, H. et al.** HMAC: Keyed-Hashing for Message Authentication. *Request for Comments 2104,* February 1997
- Authentication Method with Impersonal Token Cards. **MOLVA, R. ; G. TSUDIK.** Proceedings of IEEE Symposium on Research in Security and Privacy. IEEE Press, May 1993
- **LAMPORT, L.** Password Authentication with Insecure Communication. *Communications of the ACM,* 1981, vol. 24, 770-772